(19) Europäisches Patentamt / European Patent Office / Office européen des brevets

(11) **EP 2 793 183 B1**

(12) **EUROPEAN PATENT SPECIFICATION**

(45) Date of publication and mention of the grant of the patent:
**07.10.2020 Bulletin 2020/41**

(21) Application number: **12846316.3**

(22) Date of filing: **06.03.2012**

(51) Int Cl.:
*G01B 11/00* $^{(2006.01)}$    *G06T 3/40* $^{(2006.01)}$
*G06T 7/00* $^{(2017.01)}$

(86) International application number:
**PCT/JP2012/055689**

(87) International publication number:
**WO 2013/065332 (10.05.2013 Gazette 2013/19)**

(54) **IMAGE PROCESSING DEVICE AND RECORDING MEDIUM FOR IMAGE PROCESSING PROGRAM**

BILDVERARBEITUNGSVORRICHTUNG UND AUFZEICHNUNGSMEDIUM FÜR EIN BILDVERARBEITUNGSPROGRAMM

DISPOSITIF DE TRAITEMENT D'IMAGE ET SUPPORT D'ENREGISTREMENT POUR PROGRAMME DE TRAITEMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011 JP 2011238791**

(43) Date of publication of application:
**22.10.2014 Bulletin 2014/43**

(73) Proprietor: **Omron Corporation
Kyoto-shi, Kyoto 600-8530 (JP)**

(72) Inventors:
  • **FUJIKAWA, Masahiro
    Kyoto-shi, Kyoto 600-8530 (JP)**
  • **SHIMADA, Koji
    Kyoto-shi, Kyoto 600-8530 (JP)**
  • **SHIRANE, Kakuto
    Kyoto-shi, Kyoto 600-8530 (JP)**

(74) Representative: **Horn Kleimann Waitzhofer
Patentanwälte PartG mbB
Ganghoferstrasse 29a
80339 München (DE)**

(56) References cited:
**EP-A1- 2 667 145      EP-A2- 2 197 199
JP-A- 2009 291 895      JP-A- 2010 081 229
US-A1- 2008 036 873      US-A1- 2010 309 308
US-A1- 2010 321 470**

## Description

TECHNICAL FIELD

The present invention relates to an image processing device and an image processing program, for being aimed at conveyer tracking.

BACKGROUND ART

For the purpose of labor-saving, a technology for controlling various processes using image processing are frequently used in a factory automation (FA) field. A working process of tracking and holding a workpiece using a moving machine (hereinafter referred to as an "industrial robot" or simply referred to as a "robot") while conveying the workpiece with a conveying device such as a belt conveyer can be cited as an application example of the image processing technology. The working process is called conveyer tracking.

In the conveyer tracking technology, an imaging device captures an image of the workpiece on the conveying device, and an image processing device performs measurement processing such as pattern matching and binarization processing to the image obtained by the imaging, thereby identifying a position in which each workpiece exists. A robot tracks and holds each workpiece based on the identified position in which each workpiece exists.

For example, in a tracking method disclosed in Patent Document 1 (Japanese Unexamined Patent Publication No. 2002-113679), the images of the plural workpieces conveyed by a conveying body are captured, and handling of the workpieces is controlled based on a position coordinate of each workpiece recognized from the imaging result. More specifically, in a configuration of the tracking method of Patent Document 1, the images of an imaging region of imaging means and a subsequent imaging region are continuously captured within a width, into which a whole shape of the workpiece fits, while overlapping with each other in a traveling direction, and the position coordinate only of the workpiece including the whole shape in the imaging region is recognized.

It is considered that a panoramic image synthesized by utilizing an overlapping portion of the imaging regions is effectively used to look down at a whole state on the conveying route using the continuously-captured images.

Although not aimed at the conveyer tracking, in the image processing device disclosed in Patent Document 2 (Japanese Unexamined Patent Publication No. 5-260264), the panoramic image in the range where an operator captures the images is generated by joining plural frames, in which the operator continuously captures the images while performing panning of a camera held by hand.

Patent Document 1: Japanese Unexamined Patent Publication No. 2002-113679
Patent Document 2: Japanese Unexamined Patent Publication No. 5-260264

Document EP2667145 A1 (OMRON TATEISI ELECTRONICS CO [JP]), 27 November 2013, that falls under the terms of Art. 54(3) EPC, discloses an image processing device for outputting information assisting the operator to understand the state on the route through which the workpiece is conveyed using the captured image.

Document US 2010309308 A1 (Saphier Ofer et Al), 9 December 2010, discloses an automated optical inspection system for visual inspection of workpieces on a conveyer belt that uses multiple cameras and combines the acquired images by stitching together neighboring images in the areas of overlap.

Document US 2008/036873 A1 (SILVER WILLIAM M [US]), 14 February 2008, discloses an apparatus for the automated detection and inspection of objects being manufactured on a production line.

SUMMARY OF THE INVENTION

PROBLEMS TO BE SOLVED BY THE INVENTION

The panoramic image generated with the image processing device of Patent Document 2 is not the workpiece on the conveying device, and is not correlated with measurement information on the workpiece.

An object of the present invention is to provide an image processing device and an image processing program, for outputting information assisting the operator to understand the state on the route through which the workpiece is conveyed using the captured image.

MEANS FOR SOLVING THE PROBLEM

The invention is defined in the appended independent claims, and preferred features are recited in the dependent claims. In the following, embodiments not covered by the appended claims are not part of the invention but represent merely examples useful for understanding the invention.

In accordance with one aspect of the present invention, an image processing device that is connected to an imaging unit, the imaging unit having an overlapping region in an imaging range before and after continuous imaging, the image processing device comprising: an interface that receives a plurality of captured images obtained by the imaging unit; measurement unit for acquiring a measurement result of a subject in the captured image by performing measurement processing to the captured image; synthesis unit for generating a synthesized image by synthesizing the plurality of captured images such that the captured images overlap with one another within an overlapping range corresponding to the overlapping region in imaging order and by superimposing the measurement result of the subject which acquired in the overlapping range in the overlapping range ; and output unit for outputting the synthesized image and information indicating the overlapping range correlated with the synthesized image.

Preferably the measurement result is a figure correlated the subject in the captured image.

Preferably the synthesis unit comprising a determination unit which determines a portion of the figure is included within the overlapping rage,

Preferably the synthesis unit generates the synthesized image by superimposing the image of the measurement result of the target in the overlapping range when the portion of the figure is included within the overlapping range.

Preferably the synthesis unit determines a displayed image based on an amount of movement of the per unit time of the plurality of images by the continuous imaging.

Preferably the output unit outputs the synthesized image based on the displayed image.

Preferably the synthesis unit detects an error relating to generation the synthesized image and processing the detected error.

Preferably the synthesis unit detects lack of images to generate the synthesized image as the error.

Preferably the output unit varies an output mode of each captured image in the synthesized image.

Preferably the image processing device further comprising an operation input unit an operation input unit that externally receives an operation.

Preferably the output unit outputs the captured image selected by the operation input unit in the synthesized image while enlarging the captured image.

Preferably the selected the measurement result that is designated by the operation received by the operation input unit from the measurement results corresponding to the captured images.

Preferably the output unit outputs the synthesized image, the synthesized image including the captured image corresponding to selected the measurement result and captured images captured before and after the captured image.

Preferably the output unit selects the captured image designating a value in which the corresponding measurement result is previously specified from the captured images in the synthesized image, and outputs the selected captured image.

Preferably the output unit varies the output modes of the measurement result corresponding to the captured image in which the imaging order is odd-numbered and the measurement result corresponding to the captured image in which the imaging order is even-numbered in the captured images in the synthesized image.

Preferably outputting information on a time necessary for the measurement processing performed by the measurement unit.

Preferably the information on the necessary time is a ratio of the time necessary for the captured image measurement processing to a time interval before and after the continuous imaging.

Preferably the ratio is acquired with respect to each captured image of the synthesized image, and the ratio is output while correlated with the synthesized image and each captured image of the synthesized image.

In accordance with another aspect of the present invention, A machine readable non transitory storage medium storing a image processing program is executed by a computer connected to an imaging unit, the imaging unit having an overlapping region in an imaging range before and after continuous imaging, the image processing program causes the computer to act as: an interface that receives a plurality of captured images obtained by the imaging unit; measurement unit for acquiring a measurement result of a subject in the captured image by performing measurement processing to the captured image; synthesis unit for generating a synthesized image by synthesizing the plurality of captured images such that the captured images overlap with one another within an overlapping range corresponding to the overlapping region in imaging order and by superimposing the measurement result of the subject which acquired in the overlapping range in the overlapping range ; and output unit for outputting the synthesized image and information indicating the overlapping range correlated with the synthesized image.

EFFECT OF THE INVENTION

According to the present invention, the operator can acquire the information understanding a state on the route through which the workpiece is conveyed.

BRIEF DESCRIPTION OF THE DRAWINGS

Fig. 1 is a schematic diagram illustrating a configuration of a conveyer tracking system in which a visual sensor according to a first embodiment of the present invention is used.

Fig. 2 is a schematic diagram illustrating a hardware configuration of the conveyer tracking system in which the visual sensor according to the first embodiment of the present invention is used.

Fig. 3 is a schematic diagram illustrating a functional configuration of captured image processing according to the first embodiment of the present invention.

Fig. 4 is a schematic diagram illustrating a data storage content of the captured image processing according to the first embodiment of the present invention.

Fig. 5 is a view illustrating a procedure to generate a panoramic image according to the first embodiment of the present invention.

Fig. 6 is a main flowchart of processing according to the first embodiment of the present invention.

Fig. 7 is a schematic diagram illustrating the panoramic image of the first embodiment of the present invention.

Fig. 8 is a view illustrating other examples of a panoramic image display mode according to the first embodiment of the present invention.

Fig. 9 is a view illustrating scroll of the panoramic image according to the first embodiment of the present invention.

Fig. 10 is a main flowchart of processing according to a second embodiment of the present invention.

Fig. 11 is a view illustrating a panoramic image display mode according to the second embodiment of the present invention.

Fig. 12 is a view illustrating the panoramic image display mode according to the second embodiment of the present invention.

Fig. 13 is a view illustrating the panoramic image display mode according to the second embodiment of the present invention.

Fig. 14 is a view illustrating the panoramic image display mode according to the second embodiment of the present invention.

Fig. 15 is a view illustrating the panoramic image display mode according to the second embodiment of the present invention.

Fig. 16 is a view illustrating the panoramic image display mode according to the second embodiment of the present invention.

Fig. 17 is a view illustrating the panoramic image display mode according to the second embodiment of the present invention.

Fig. 18 is a view illustrating a screen on which a measurement result according to the second embodiment of the present invention is displayed using a threshold.

Fig. 19 is a view illustrating the screen on which the measurement result according to the second embodiment of the present invention is displayed using the threshold.

Fig. 20 is a view illustrating an example of the panoramic image for removing overlapping measurement according to the second embodiment of the present invention.

Fig. 21 is a view illustrating a screen example of a ratio of a measurement processing time to an imaging interval according to the second embodiment of the present invention.

Fig. 22 is a view illustrating a screen example for changing a parameter according to the second embodiment of the present invention.

Fig. 23 is a flowchart of processing of changing an imaging parameter according to the second embodiment of the present invention.

Fig. 24 is a view illustrating calibration according to a third embodiment of the present invention.

Fig. 25 is a view illustrating an example of a parameter set acquired by the calibration according to the third embodiment of the present invention.

Fig. 26 is a view illustrating a procedure of the calibration according to the third embodiment of the present invention.

Fig. 27 is a view illustrating the procedure of the calibration according to the third embodiment of the present invention.

Fig. 28 is a view illustrating the procedure of the calibration according to the third embodiment of the present invention.

Fig. 29 is a flowchart of processing according to the fourth embodiment of the present invention.

Fig. 30 is a schematic diagram illustrating a functional configuration of captured image processing according to the fourth embodiment of the present invention.

Fig. 31 is an outline of processing to superimpose the measurement result on the image according to the fourth embodiment of the present invention.

Fig. 32 is a processing to superimpose the measurement result on the image according to the fourth embodiment of the present invention.

Fig. 33 is determination for displaying the measurement result on the image according to the fourth embodiment of the present invention.

Fig. 34 is a view illustrating a panoramic image display mode according to the fourth embodiment of the present invention.

Fig. 35 is a view illustrating a panoramic image display mode according to the fourth embodiment of the present invention.

Fig. 36 is a view illustrating a panoramic image display mode according to the fourth embodiment of the present invention.

Fig. 37 is a view illustrating a panoramic image display mode according to the fourth embodiment of the present invention.

Fig. 38 is one example of display image according to the fourth embodiment of the present invention.

Fig. 39 is another example of display image according to the fourth embodiment of the present invention.

Fig. 40 is a schematic diagram illustrating a hardware configuration of a support device 600 according to a fourth embodiment of the present invention.

MODES FOR CARRYING OUT THE INVENTION

Hereinafter, embodiments of the present invention will be described with reference to the drawings. In the drawings, the identical or equivalent component is designated by the identical symbol, and overlapping description is not repeated.

[First embodiment]

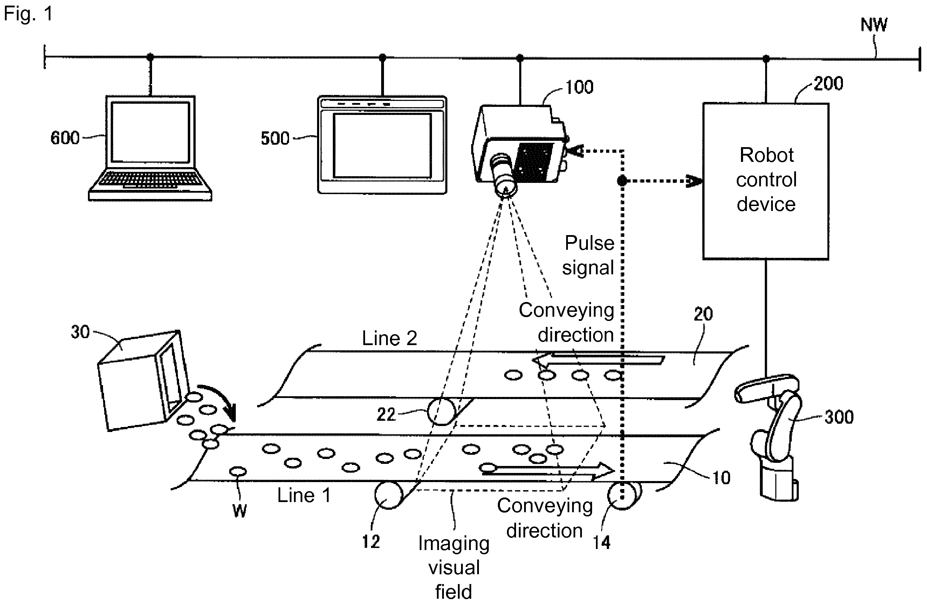

Fig. 1 is a schematic diagram illustrating a configuration of a conveyer tracking system in which a visual sensor according to a first embodiment of the present invention is used. The conveyer tracking system in Fig. 1 includes two conveying devices (conveyers) 10 and 20. The conveyers 10 and 20 are rotated by driving rollers 12 and 22, respectively. Hereinafter, the conveyers 10 and 20 are also referred to as a line 1 and a line 2. In the example in Fig. 1, the line 1 moves to a right side, and the line 2 moves to a left side. A discharging device 30 or the like randomly supplies a workpiece W to the line 1 from the left side. The workpiece W on the line 1 moves from the left to the right. Typically, foods such as a sweet stuff or various tablets are considered as the workpiece W.

A visual sensor 100 of the first embodiment is provided in a predetermined position above the line 1. An imaging unit that captures an image of a subject such as the workpiece and a captured image processing unit that processes the image captured by the imaging unit are integrally formed in the visual sensor 100. Alternatively, the imaging unit and the captured image processing unit may separately be formed.

In the visual sensor 100, an imaging visual field is set so as to include a whole of a width direction (a direction orthogonal to a conveying direction) of the line 1. The imaging visual field can be determined using a setting of an angle of view (or a view angle) of the imaging unit (camera). In the description, the imaging visual field corresponds to a range where the image can be captured with the imaging unit, and sometimes the imaging visual field is called an "imaging range".

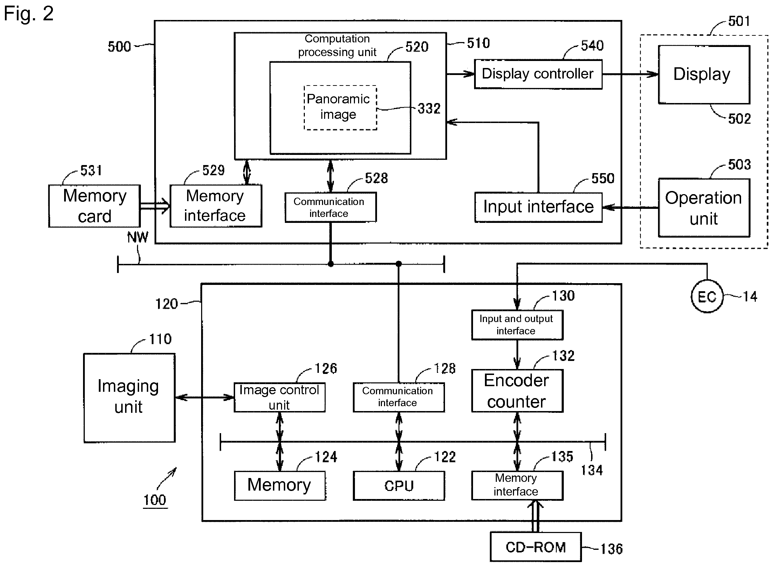

The visual sensor 100, which is set such that the imaging range is obtained, continuously captures the image in a predetermined period to be able to sequentially capture the image of the workpiece W flowing on the line 1. The visual sensor 100 performs measurement processing such as pattern matching to the sequentially-captured image, thereby performing positioning of each workpiece and tracking processing. Thus, the imaging unit (an imaging unit 110 in Fig. 2) of the visual sensor 100 is disposed so as to capture the image of the workpiece W conveyed on the conveyer 10 that is of the conveying device. A captured image processing unit 120 (see Fig. 2) that processes the captured image is connected to the imaging unit 110.

A robot 300, which moves the workpiece W to the line 2 while holding the workpiece W, is disposed on a downstream side of the visual sensor 100 in the conveying direction of the line 1. The robot 300 includes an arm in order to hold the workpiece W, and the robot 300 moves the arm to a target position to hold the workpiece W on the line 1. That is, the robot 300 is disposed on the downstream side of the imaging range of the imaging unit of the visual sensor 100 in a conveying route of the conveyer 10 (the line 1) that is of the conveying device, and the robot 300 corresponds to the moving machine that handles the workpiece W. More specifically, the robot 300 positions the arm onto the target workpiece W, picks up the workpiece W, and aligns the workpiece W on the line 2.

The robot 300 is disposed on a moving mechanism (not illustrated) that moves the robot 300 along the line 1, and the robot 300 moves across a predetermined range. The moving range of the robot 300 is also called a tracking range.

The tracking processing and the positioning processing of the robot 300 are controlled using a detection result of an encoder 14 provided in the line 1. Typically, a rotary encoder is used as the encoder 14, and a pulse signal is generated in association with rotation. The number of rotations of a roller coupled to the conveyer 10 (the line 1), namely, the pulse signals generated by the encoder 14 corresponds to a signal indicating a travel distance in the conveying route of the conveyer 10 that is of the conveying device by counting the number of pulses of the generated pulse signal, and the travel distance of the conveyer 10 is calculated based on the pulse signal.

The robot 300 performs action in response to an instruction from a robot control device 200. That is, the robot control device 200 is the control device that controls robot 300 that is of the moving machine. The robot control device 200 is connected to the visual sensor 100 through a network NW, and provides an instruction necessary for the action to hold the workpiece W to the robot 300 based on the position of each workpiece W detected by the visual sensor 100.

An operation display device 500 and a support device 600 that has a function equivalent to a personal computer are connected to the network NW in addition to the visual sensor 100 and the robot control device 200. The operation display device 500 displays a processing result from the visual sensor 100 and an action state of the robot 300 from the robot control device 200, and provides various instruction to the visual sensor 100 and/or the robot control device 200 in response to a user's operation.

In the conveyer tracking system in Fig. 1, there is a potential need to further enhance a line speed (a conveying speed) in order to improve productivity. In order to meet the need, in the configuration of the conveyer tracking system of the first embodiment, the pulse signal generated by the encoder 14 is input to not only the robot control device 200 but also the visual sensor 100. The visual sensor 100 and the robot control device 200 acquire the positional information on the target conveying device (the conveyer) while synchronizing with each other, which allows the action to be performed while communication between the robot control device 200 and the visual sensor 100 is conducted with each other through the network NW. At this point, detailed action control in which the robot control device 200 and the visual sensor 100 synchronize with each other is not given.

<Imaging action and travel distance>

The imaging action and the travel distance of the visual sensor 100 in the conveyer system in Fig. 1 will be described below.

The visual sensor 100 captures the image of the line 1. The imaging action of the visual sensor 100 is started in response to an imaging instruction from the robot control device 200. The imaging instruction is transmitted through the network NW that connects the visual sensor 100 and the robot control device 200. Typically, general-purpose networks such as Ethernet (registered trademark) can be used as the network NW.

The visual sensor 100 is configured to receive the imaging instruction from the robot control device 200, and starts the imaging in response to the imaging instruction. Therefore, the visual sensor 100 sequentially acquires the image in which the imaging visual field is taken. The visual sensor 100 performs the measurement processing to the image. The visual sensor 100 transmits the positional information on the workpiece W during the imaging to the robot control device 200. The positional information on the workpiece W during the imaging is obtained by the measurement processing. Thus, the visual sensor 100 performs the measurement processing to the image obtained by the imaging of the imaging unit, thereby obtaining the positional information on the region corresponding to the previously-registered workpiece in the image.

More specifically, the robot control device 200 counts the number of pulses included in the pulse signal from the encoder 14, and transmits the imaging instruction to the visual sensor 100 through the network NW at a time when the number of pulses greater than or equal to a predetermined value are input.

The positional information on each workpiece W is transmitted from the visual sensor 100 to the robot control device 200 through the network NW. Using the received positional information, the robot control device 200 provides the instruction necessary for the holding action to the robot 300. At this point, the detailed holding action of the robot 300 is not given.

The pulse signal, which is generated according to the detection result of the encoder 14 provided in the line 1, is configured to be input to the visual sensor 100 and the robot control device 200. Each of the visual sensor 100 and the robot control device 200 includes an encoder counter that counts the number of pulses included in the pulse signal. Because the pulse signal is concurrently input from the encoder 14 to the visual sensor 100 and the robot control device 200, when the encoder counters are initialized (counters are reset) at the identical time, a counter value of the subsequently-input pulse signal is the identical value, namely, the counter values can synchronize with each other.

More specifically, the travel distance of the conveyer per pulse included in the pulse signal from the encoder 14 is previously set to both the visual sensor 100 and the robot control device 200. Identical parameters (such as a counter maximum value, a counter minimum value, and an increasing value per pulse) are set to the encoder counters of the visual sensor 100 and the robot control device 200. That is, with respect to the counting, the identical parameters are set between the encoder counter of the visual sensor 100 and the encoder counter of the robot control device 200.

The counter values of the encoder counter are initialized to zero before a production line operates. That is, the encoder counters of the visual sensor 100 and the robot control device 200 are reset before the counting of the number of pulses included in the pulse signal is started.

In the first embodiment, means for retaining the travel distance in the conveying route of the conveyer 10 is implemented while the visual sensor 100 and the robot control device 200 synchronize with each other.

<Hardware configuration>

Fig. 2 is a schematic diagram illustrating a hardware configuration of the conveyer tracking system in which the visual sensor according to the first embodiment of the present invention is used. Referring to Fig. 2, the visual sensor 100 includes the imaging unit 110 and the captured image processing unit 120. The captured image processing unit 120 conducts communication with the operation display device 500. The robot control device 200 and the support device 600 are not illustrated in Fig. 2.

In Fig. 2, the image processing device that receives and processes the captured image obtained by the imaging of the imaging unit 110 includes the captured image processing unit 120 and the operation display device 500. Alternatively, the support device 600 may include the function of the operation display device 500. In this case, the image processing device is configured while including the functions of the captured image processing unit 120 and the support device 600.

The imaging unit 110 is a device that captures the image of the subject existing in the imaging visual field. The imaging unit 110 includes an optical system such as a lens and a diaphragm and light receiving element such as a CCD (Charge Coupled Device) image sensor and a CMOS (Complementary Metal Oxide Semiconductor) image sensor as a main structural element. The imaging unit 110 performs the imaging in response to the instruction from the captured image processing unit 120, and outputs the image data obtained by the imaging to the captured image processing unit 120.

The captured image processing unit 120 includes a CPU (Central Processing Unit) 122, a memory 124, an image control unit 126, a communication interface (interface) 128, an input and output interface (interface) 130, an encoder counter 132, and a memory interface (interface) 135 in which a CD-ROM (Compact Disk-Read Only Memory) 136 that is of an example of a detachable recording medium is loaded. These components are connected to one another through a bus 134 so as to be able to conduct data communication with one another.

The CPU 122 is a processor that performs a main calculation in the captured image processing unit 120. Various programs executed by the CPU 122, the image data captured by the imaging unit 110, and various parameters are stored in the memory 124. Typically, the memory 124 includes a volatile storage device such as a DRAM (Dynamic Random Access Memory) and a nonvolatile storage device such as a FLASH memory.

The image control unit 126 performs the imaging action in the connected imaging unit 110 in response to an internal command from the CPU 122 or the like. The image control unit 126 includes an interface that transmits various commands to the imaging unit 110 and an interface that receives the image data from the imaging unit 110.

The communication interface 128 exchanges various pieces of data with operation display device 500. Typically, the visual sensor 100 and the operation display device 500 are connected to each other through Ethernet (registered trademark), and the communication interface 128 is hardware compliant with Ethernet (registered trademark).

The input and output interface 130 outputs various signals to the outside from the captured image processing unit 120, and inputs various signals from the outside. Particularly, the input and output interface 130 receives the pulse signal generated by the encoder 14, converts the pulse signal into a digital signal, and outputs the digital signal to the encoder counter 132.

The encoder counter 132 counts the number of pulses included in the pulse signal from the encoder 14, and outputs a count value. Because basically the encoder counter 132 performs the action independently of a calculation cycle of the CPU 122, the encoder counter 132 certainly catches the number of pulses included in the pulse signal from the encoder 14.

On the other hand, the operation display device 500 includes a computation processing unit 510 including a memory 520, a communication interface (interface) 528, an input and output interface (interface) 550, a display controller 540 that controls display action of an external display 502 such as a liquid crystal display, an input interface (interface) 550 that receives an operation from an operation unit 503 constructed by a button and a switch, which are operated by the operator, and a memory interface (interface) 529 in which a memory card 531 that is of an example of the detachable recording medium is mounted. These components are constructed by various processors such as a display DSP (Digital Signal Processor).

In the first embodiment, the display 502 and the operation unit 503 are separately provided. Alternatively, what is called a touch panel in which the display 502 and the operation unit 503 are integrally constructed may be provided.

The computation processing unit 510 receives the image data from the visual sensor 100 and controls the display controller 540 using the received image data, thereby causing the display 502 to display the image or inputting the instruction provided by the operator's operation of the operation unit 503 through the input interface 550. The image data received from the visual sensor 100 is stored in the memory 220. Information on the measurement result of the workpiece W detected by the measurement processing of the visual sensor 100 is also stored in the memory 220.

The communication interface (interface) 528 exchanges various pieces of data with the captured image processing unit 120 of the visual sensor 100. Typically, the visual sensor 100 and the operation display device 500 are connected to each other through Ethernet (registered trademark), and the communication interface 528 is hardware compliant with Ethernet (registered trademark).

<Functional configuration>

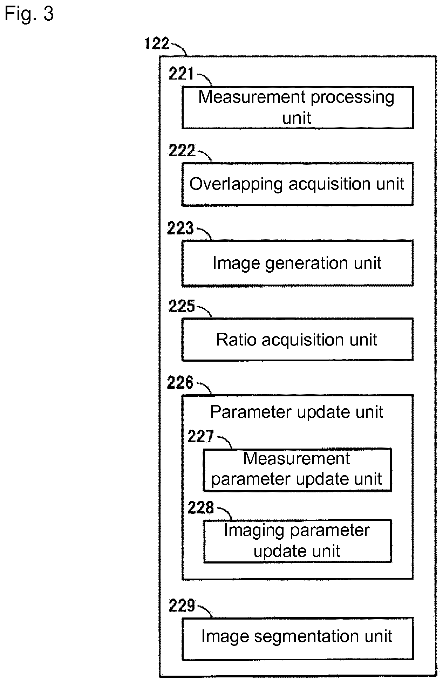

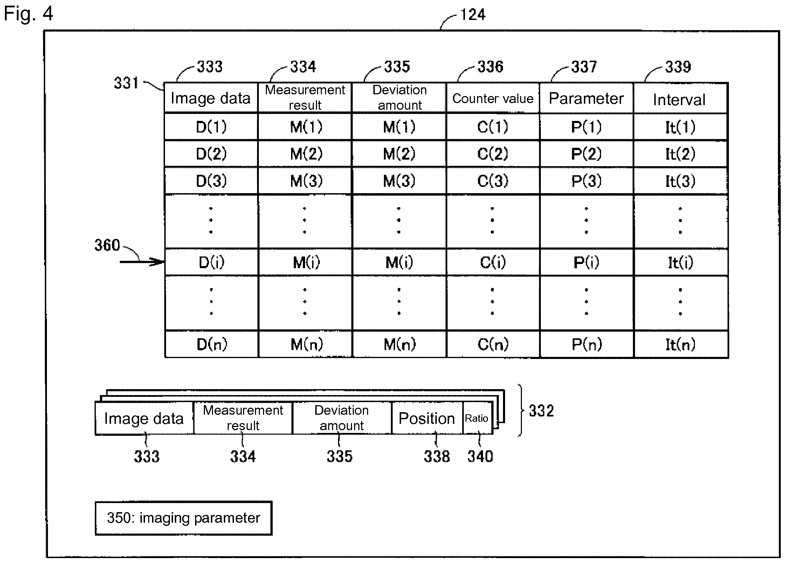

Fig. 3 is a schematic diagram illustrating a functional configuration of captured image processing according to the first embodiment of the present invention. Fig. 4 is a schematic diagram illustrating a data storage content of the captured image processing according to the first embodiment of the present invention.

It is assumed that each function in Fig. 3 is implemented such that the CPU 122 of the captured image processing unit 120 executes the program previously stored in the memory 124. Alternatively, each function may be implemented by not only the program but also a combination of the program and a circuit.

Various programs executed by the captured image processing unit 120 are distributed while stored in the CD-ROM 136. The programs stored in the CD-ROM 136 are read by the memory interface 135 having a CD-ROM (Compact Disk-Read Only Memory) drive function, and stored in the memory 124 and the like. Alternatively, the program may be downloaded from an upper-level host computer through the network NW.

In the first embodiment, while the workpiece W is conveyed on the line 1, the imaging unit 110 connects the pieces of image data acquired by continuously capturing the imaging range, thereby generating the image corresponding to a full view from upstream to downstream on the line 1. The image corresponding to the full view is called a panoramic image.

The CPU 122 has a function to process the panoramic image. Specifically, the CPU 122 includes a measurement processing unit 221 that performs the workpiece measurement processing to the captured image, an overlapping acquisition unit 222 that acquires an overlapping range between the images of the panoramic image, an image generation unit 223 that generates the panoramic image in which the images overlap with each other in the overlapping range, a ratio acquisition unit 225 that acquires a ratio of a time necessary for the measurement processing to an imaging interval, a parameter update unit 226 that updates various parameters (types and/or values of parameters), and an image division unit 229 that divides the panoramic image into the captured images.

The parameter update unit 226 includes a measurement parameter update unit 227 that updates the parameter related to the measurement processing and an imaging parameter update unit 228 that updates the parameter related to the imaging interval.

Search processing in which pattern matching is used based on a model image of the previously-registered workpiece W can be cited as a typical example of the measurement processing. In the search processing, a feature portion of the workpiece W is previously registered as an image pattern (model) and a portion most similar to the previously-registered model is searched from the input image. At this point, a position, an inclination, and a rotation angle of the portion most similar to the model and a correlation value indicating how much similar to the model are calculated. In the case that labeling processing is applied, a portion matched with the previously-registered model or display attribute (such as a color) is searched from the input image, and a label (a number) is added to the searched portion. In response to designation of the number, an area or a gravity center of the designated portion is calculated using the number.

At this point, it is assumed that the measurement processing unit 221 outputs the position and the correlation value of the workpiece W calculated by the pattern matching as the measurement result, and that the parameter (the type and the value) of the measurement processing indicates the type and the value of a correlation coefficient used to calculate the correlation value.

Referring to Fig. 4, image data 333 of the captured image output from the imaging unit 110, a table 331 in which data related to each piece of image data 333 is stored, panoramic image data 332, and data including imaging parameter 350 are stored in the memory 124.

In the table 331, the data related to the image data 333 of the captured image acquired every time of the imaging includes a measurement result 334 of the measurement processing performed to the image data 333, a deviation amount 335, a counter value 336 input from the encoder counter in capturing the image data 333, a parameter (the type and the value) 337 of the measurement processing performed to the image data 333, and an imaging interval 339. The measurement result 334 includes the correlation value and an image coordinate position, which are acquired when the measurement processing unit 221 performs the measurement processing to the corresponding image data 333. The parameter 337 indicates the type or the value of the correlation coefficient used to calculate the correlation value.

<Panoramic image generation processing>

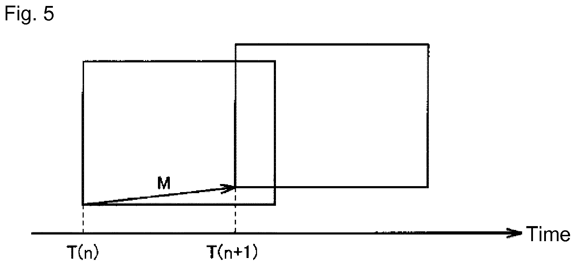

Fig. 5 is a view illustrating a procedure to generate the panoramic image according to the first embodiment of the present invention. The panoramic image generation processing performed by the image generation unit 223 will be described with reference to Fig. 5.

The panoramic image may be generated by a well-known panoramic synthesizing technology. However, at this point, the panoramic image generation processing in which the counter value 336 of the encoder counter is used will be described below.

In advance of the generation of the panoramic image, the overlapping acquisition unit 222 acquires the deviation amount 335 of each piece of image data 333, and the deviation amount 335 is stored in the table 331. Specifically, the overlapping acquisition unit 222 acquires the counter value 336 from the encoder counter 132 during the imaging, and stores the counter value 336 in the table 331 while correlating the counter value 336 with the image data 333 of the captured image. Thus, every time the captured image is acquired, the image data 333 and the counter value 336 are acquired and stored in the table 331.

A procedure to acquire the deviation amount 335, which is performed by the overlapping acquisition unit 222 will be described below. It is assumed that Epc = (Xp, Yp) is a travel distance vector expressing the travel distance on the line 1 of the conveyer per pulse of the counter value of the encoder counter 132. It is assumed that a conversion coefficient R [mm/pix] per pixel of the image data 333 of the captured image is previously determined and stored in the memory 124. In this case, the travel distance vector is defined as Epp = (Xp/R, Yp/R) on the image per pulse of the counter value 336. In the first embodiment, Epc = (Xp,0) is used for the sake of convenience.

Referring to Fig. 5, assuming that $T(n)$ is the counter value 336 in capturing the Nth image data 333, and that $T(n+1)$ is the counter value 336 in capturing the $(N+1)$-th image data 333, a deviation amount M between the Nth and $(N+1)$-th images can be calculated as $M = (T(n+1) - T(n)) \times Epp$.

Accordingly, the overlapping acquisition unit 222 can calculate the deviation amount M between the Nth and $(N+1)$-th pieces of image data 333 using the counter value 336 read from the table 331. The calculated deviation amount M is stored as the deviation amount 335 in the table 331. For the image data 333 of the table 331, the deviation amount 335 corresponding to image data $D(i)$ corresponds to the deviation amount M between image data $D(i)$ and image data $D(i+1)$.

<Generation of panoramic image>

The panoramic image generation performed by the image generation unit 223 will be described below. The image generation unit 223 generates the panoramic image every time the CPU 122 receives a monitor instruction from the operation display device 500.

The image data 333 captured and acquired by the imaging unit 110 is stored in the table 331 in the imaging order. In generating the panoramic image, it is assumed that the number of pieces of image data 333 necessary to generate the panoramic image is stored in the table 331.

When receiving the monitor instruction, the image generation unit 223 sequentially reads the Nth and $(N+1)$-th pieces of image data 333 from the table 331, namely, reads the pieces of image data 333 in the imaging order, and arrays the pieces of image data 333 in a predetermined area of the memory 124 in the order in which the pieces of image data 333 are read from the table 331. The panoramic image data 332 including the plural (specifically, at least two) pieces of image data 333, which are continuously captured, is generated by repeating the processing.

The panoramic image data 332 includes the plural pieces of image data 333 used to generate the panoramic image, the measurement result 334 related to each piece of image data 333 read from the table 331, the deviation amount 335, a position 338 of the image in the panoramic image, and a ratio 340. The ratio 340 is described in detail later.

The image generation unit 223 determines the position 338 in the following manner. At this point, a size of the panoramic image is previously determined according to a size of the display 502, and a size of the image data 333 is previously determined. Accordingly, when the number of pieces of image data 333 constituting the panoramic image is determined, the position of each piece of image data 333 in the panoramic image is uniquely determined by the deviation amount 335.

Every time the image generation unit 223 generates the panoramic image data 332, the image generation unit 223 sets a pointer 360 to the table 331. The pointer 360 indicates the finally-read image data 333, namely, the latest image data 333 in the plural pieces of image data 333 used to generate the panoramic image data 332.

When the monitor instruction is input next, the image generation unit 223 generates the data of the new panoramic image using the image data 333 that is stored subsequent to the image data 333 indicated by the pointer 360.

<Main flowchart>

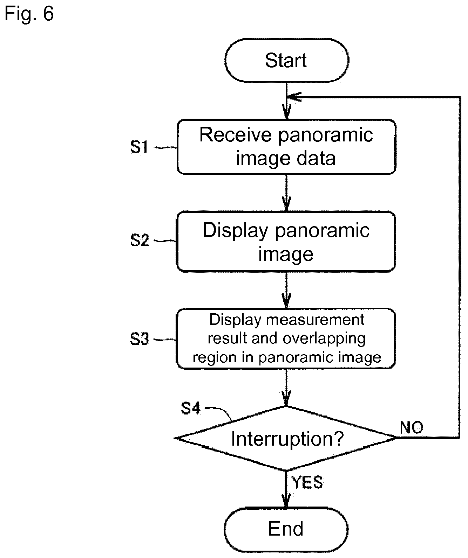

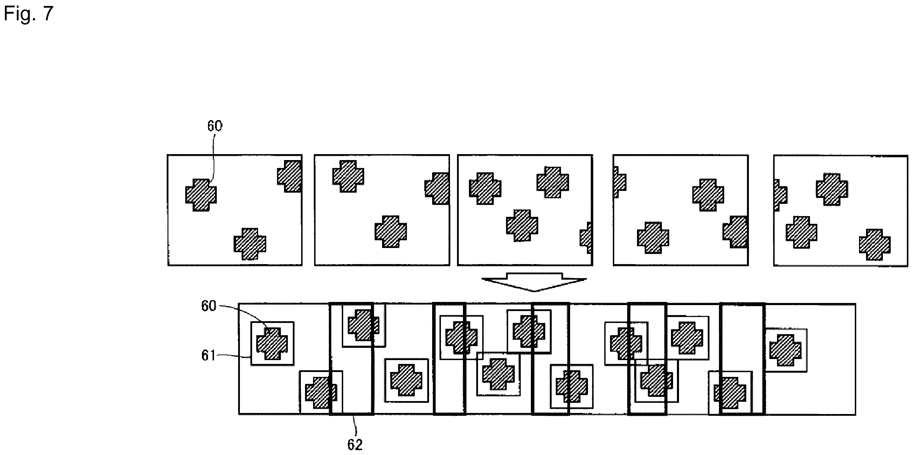

Fig. 6 is a main flowchart of processing according to the first embodiment of the present invention. Fig. 7 is a schematic diagram illustrating the panoramic image of the first embodiment of the present invention. In Fig. 7, the lower-stage panoramic image is generated by overlapping the pieces of image data 333 of the upper-stage captured images

9

according to the corresponding deviation amount 335 in the imaging order. Each piece of image data 333 includes an image 60 of the workpiece conveyed on the line 1. An image 61 of the measurement processing result for each piece of image data and an image 62 of the overlapping region are simultaneously displayed together with each piece of image data while overlaid (superimposed) on the panoramic image.

At this point, the measurement processing result is displayed by the image 61. In the case that the measurement processing result is displayed while correlated with the panoramic image, the measurement processing result is not limited to the superimposed image, but the measurement processing result may be displayed by an individual graph or numerical value. The overlapping region is superimposed and displayed by the image 62. However, the overlapping region is not limited to the superposition mode. The overlapping region may be displayed in any way as long as the overlapping region is correlated with the panoramic image. The panoramic image generation and display procedure in Fig. 7 will be described with reference to the flowchart in Fig. 6.

It is assumed that the plural pieces of image data 333 acquired by the imaging of the imaging unit 110 and the data related to each piece of image data 333 are stored in the table 331.

The CPU 122 reads the panoramic image data 332 generated by the image generation unit 223 from the table 331, and transmits the panoramic image data 332 to the operation display device 500. Therefore, the computation processing unit 510 of the operation display device 500 receives the panoramic image data 332 through the communication interface 528 (Step S1). The received panoramic image data 332 is stored in the memory 520.

The computation processing unit 510 displays each piece of image data 333 of the panoramic image data 332 from the memory 520 on the display 502 while overlapping the image data 333 according to the deviation amount 335 and the position 338, which are correlated with each other (Step S2). Therefore, the panoramic image is displayed on the display 502.

Then the computation processing unit 510 reads the measurement result 334 correlated with each piece of image data 333 from the memory 520, and displays the image 61 on the panoramic image of the display 502 based on the measurement result 334 (Step S3). The display position of the image 61 can be determined by the image coordinate position included in the measurement result 334. The image 62 expressing the overlapping region between the pieces of image data 333 is simultaneously displayed on the panoramic image (Step S3).

The operator performs the operation to continue or interrupt the monitor using the operation unit 503. The input interface 550 receives and outputs the instruction to continue or interrupt the monitor in response to the operation. The computation processing unit 510 determines the continuation or the interruption of the monitor based on the input instruction (Step S4).

The sequence of pieces of processing is ended when the computation processing unit 510 determines the interruption of the monitor (YES in Step S4). The processing returns to Step S1 when the computation processing unit 510 determines the continuation of the monitor (NO in Step S4). Therefore, the computation processing unit 510 transmits the monitor instruction to the captured image processing unit 120 through the communication interface 528.

The image generation unit 223 of the captured image processing unit 120 generates the next panoramic image data 332 in response to the received monitor instruction. Then, because the pieces of processing from Step S1 are performed to the newly-generated panoramic image data 332, the operator can monitor the line 1 using the new panoramic image displayed on the display 502.

The panoramic image at the lower stage in Fig. 7 is displayed on the display 502, so that the operator can simultaneously check the image 61 of the measurement processing result and the image 62 of the overlapping region. Whether the visual sensor 100 detects the workpiece is determined by checking the images 60 and 61.

Because the operator can check the imaging interval by checking the image 62 of the overlapping region, it can be determined that which one of the measurement processing and the imaging interval causes the workpiece to be not able to be detected.

<Other display modes>

The panoramic image of the first embodiment is not limited to the display mode in Fig. 7, but the following display modes may be used.

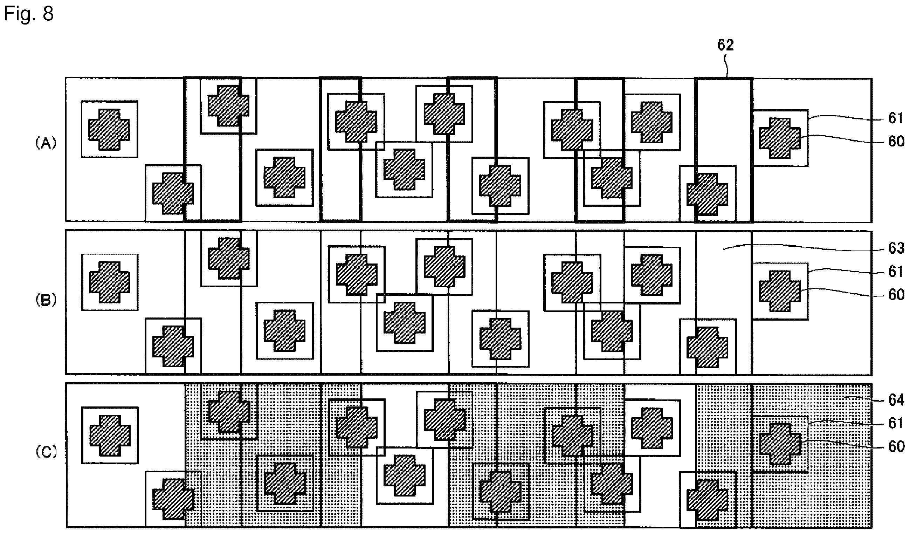

Fig. 8 is a view illustrating other examples of a panoramic image display mode according to the first embodiment of the present invention. In the display mode of the panoramic image, as illustrated in Fig. 8(A), the image 61 may be displayed while correlated wit the image 60 of the workpiece based on the measurement processing result, and the image 62 of the overlapping region may be surrounded by a thick-line frame. The image 61 may be displayed while color-coded according to the value (the correlation value) of the measurement processing result.

As illustrated in Fig. 8(B), the image 62 of the overlapping region may be displayed by a predetermined color 63. As illustrated in Fig. 8(C), for the sequence of images that are overlapped with the deviation amount M in the panoramic image, the Nth image and the (N+1)-th image, namely, the odd-numbered image and the even-numbered image may differ from each other in the display mode. For example, the odd-numbered image and the even-numbered image may be displayed while background colors 64 vary.

<Scroll display>

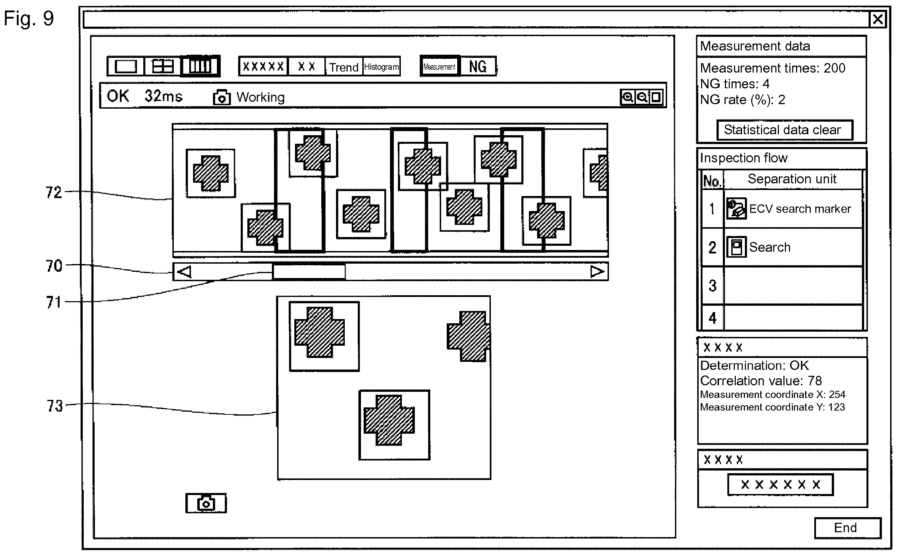

Fig. 9 is a view illustrating scroll of the panoramic image according to the first embodiment of the present invention. Referring to Fig. 9, the display region of the display 502 includes a display region 72 for the panoramic image, a display region for a slide bar 70, and a display region for a selected image 73.

The panoramic image in which the plural images are horizontally arrayed in line is displayed in the region 72, and an extending direction of the slide bar 70 is identical to the direction in which the image array extends. The operator operates the slider 71 on the slide bar 70. The computation processing unit 510 detects the travel distance (a moving direction and a moving distance) of the slider 71 through the input interface 550, and outputs a scroll instruction related to the detected travel distance to the display controller 540. According to the travel distance related to the scroll instruction, the display controller 540 moves the image (the panoramic image) of the region 72, namely, displays the image of the region 72 while scrolling the image.

At this point, it is assumed that the panoramic image data 332 including the sufficient number of pieces of image data 333 is stored in the memory 529 such that the scroll can be performed.

By performing the scroll operation through the operation unit 503, the operator can select the desired image from the plural images in the panoramic image displayed on the region 72. When the selection operation is performed, the computation processing unit 510 detects a click position of a click operation through the input interface 550. The image data 333 corresponding to the selected image is enlarged and displayed as the selected image 73 based on the detected click position and the position 338 of the panoramic image data 332.

[Second embodiment]

A second embodiment will be described below. A preferred example in which the operator changes various parameter in the image processing will be described in the second embodiment.

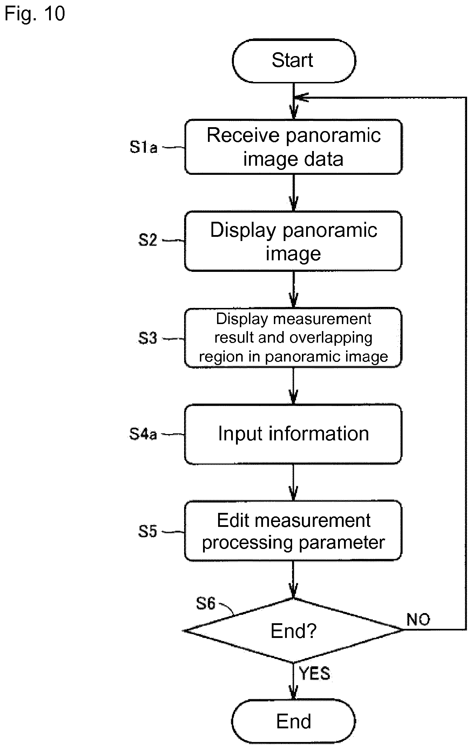

Fig. 10 is a main flowchart of processing according to the second embodiment of the present invention. The parameter related to the measurement processing is changed in the processing in Fig. 10.

The CPU 122 reads the panoramic image data 332 generated by the image generation unit 223 from the table 331, and transmits the panoramic image data 332 to the operation display device 500. Therefore, the computation processing unit 510 of the operation display device 500 receives the panoramic image data 332 through the communication interface 528 (Step S1a). The received panoramic image data 332 is stored in the memory 520.

In Steps S2 and S3, similarly to the first embodiment, the panoramic image is displayed on the display 502, and the image 61 of the measurement processing result and the image 62 of the overlapping region are simultaneously displayed while overlaid on the panoramic image.

In the case that the parameter of the measurement processing is changed, the operator operates the operation unit 503 to input the information for changing the parameter (Step S4a). Specifically, the operator inputs the information on the type of the parameter and the information indicating the post-change value.

The computation processing unit 510 transmits the information for changing the parameter to the captured image processing unit 120 through the communication interface 528.

The captured image processing unit 120 receives the information for changing the parameter. Using the received information, the measurement parameter update unit 227 updates the parameter (such as the type and the value) for the measurement processing, and outputs the post-update parameter to the measurement processing unit 221.

Using the post-change parameter, the measurement processing unit 221 performs the measurement processing to each piece of image data 333 in the currently-displayed panoramic image. The measurement result 334 related to the each piece of image data 333 in each piece of panoramic image data 332 of the memory 124 is updated using the measurement result (Step S5). Therefore, the panoramic image data 332 of the memory 124 is edited (updated) into data having the measurement result 334, which is obtained by the measurement processing using the post-update parameter.

In the case that the post-edit panoramic image is checked, the operator makes a request for an operation to check an edit result through the operation unit 503. When the checking operation is performed, the computation processing unit 510 inputs a checking instruction in response to the operation.

When it is determined that the checking instruction is not input (YES in Step S6), the computation processing unit 510 ends the sequence of pieces of processing. On the other hand, when it is determined that the checking instruction is input (NO in Step S6), the computation processing unit 510 transmits the checking instruction to the captured image processing unit 120.

In the captured image processing unit 120, when receiving the checking instruction, the CPU 122 reads the post-edit panoramic image data 332 from the memory 124 and transmits the post-edit panoramic image data 332 to the operation display device 500. Therefore, the pieces of processing from Step S1 are performed using the post-edit panoramic image data 332. Accordingly, using the panoramic image, the operator can check the measurement processing result, which is obtained by using the post-update parameter.

In the second embodiment, the panoramic image in which the parameter is already updated is acquired by editing the panoramic image data 332 that is already generated and stored in the memory 124. However, the panoramic image acquiring method is not limited to the method of the second embodiment. For example, the newly-captured and -acquired image data 333 may be used.

Specifically, as described above in the first embodiment, the new panoramic image data 332 may be generated by performing the measurement processing using the post-update parameters for the pieces of image data 333 from the image data 333 indicated by the pointer 360.

The parameter 337 of the table 331 may be updated using the post-update parameter. Particularly, as needed basis, the parameter 337 of the table 331 may be updated when the operator inputs the update instruction through the operation unit 503.

<Display mode>

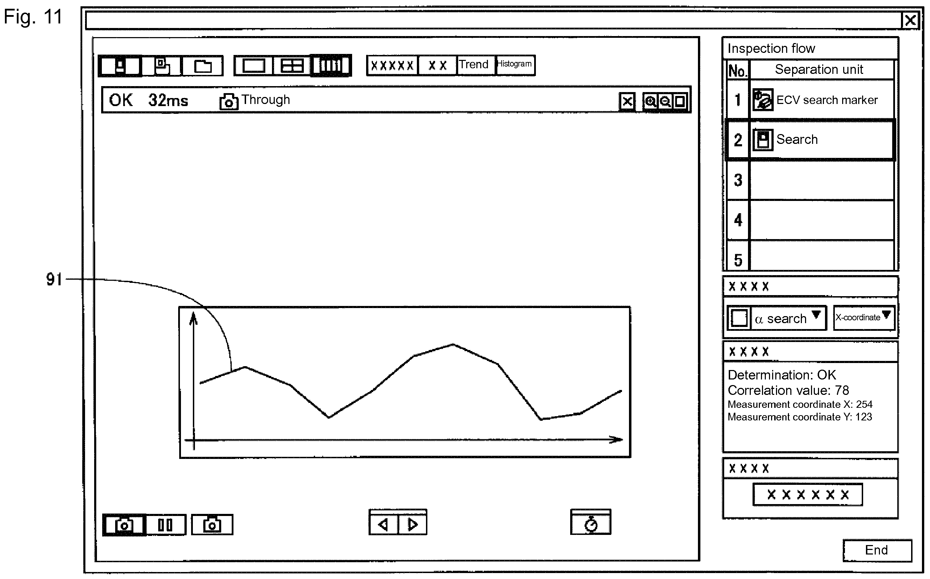

Figs. 11 to 13 are views illustrating the panoramic image display mode according to the second embodiment of the present invention. As described above, in the case that the parameter of the measurement processing is updated, the value of the measurement result 334 is extracted and displayed such that the operator easily understands an indication of the post-update value.

Referring to Fig. 11, a vertical axis indicating the value of the measurement result 334 and a horizontal axis orthogonal to the vertical axis are displayed on the display 502. The horizontal axis indicates the value expressing the position of each piece of image data 333 in the panoramic image. The position is acquired based on the position 338. At this point, for example, the value indicated by the vertical axis expresses the correlation value.

A graph 91 is generated by connecting the correlation values corresponding to the pieces of image data 333 using line divisions. The operator can quickly understand whether the image data 333 in which the value of the measurement result 334 is high or low exists from the graph 91.

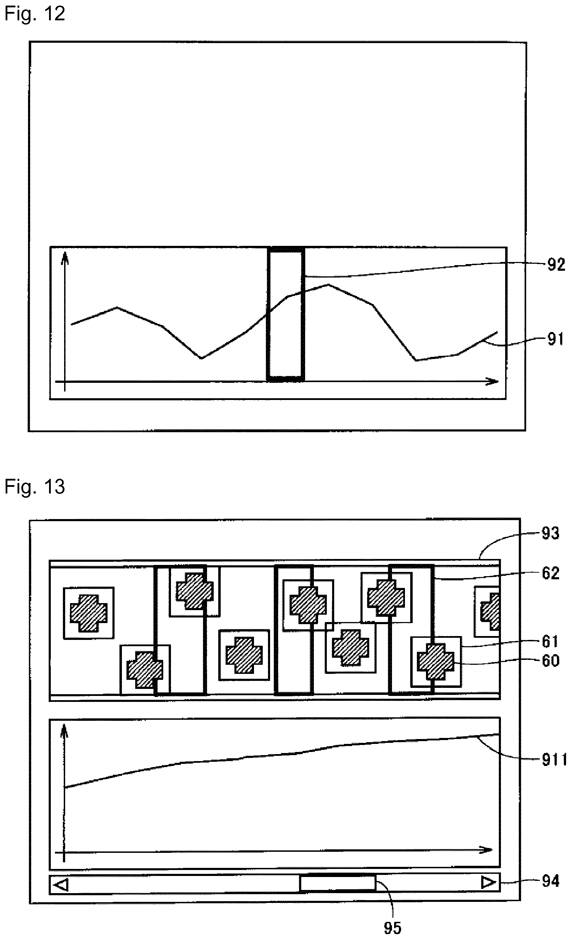

Fig. 12 illustrates a state in which a portion 92 of the graph 91 is selectively designated in response to the operator's operation. The portion 92 is displayed in the mode in which the portion 92 can be distinguished from the graph 91. For example, the frame of the portion 92 is displayed in red.

The computation processing unit 510 extracts the horizontal-axis value corresponding to the portion 92 through the input interface 550. The image data 333, the data of the measurement result 334, and the data of the deviation amount 335, which are correlated with the position 338 corresponding to the extracted value, are read from the memory 520, and the image is displayed on the display 502 based on the read pieces of data (see Fig. 13).

Fig. 13 illustrates the state in which the image corresponding to the portion 92 is enlarged and displayed. In the display 502 in Fig. 13, a panoramic image 93 is displayed on the upper stage, and a graph 911 is displayed on the lower stage in relation to the panoramic image 93. The upper-stage panoramic image 93 includes the image data 333 corresponding to the portion 92 of the selected measurement result and the pieces of image data 333 that are acquired before and after the image data 333 concerned.

A slide bar 94 is displayed in the direction identical to the direction in which the horizontal axis of the graph 911 extends. The operator can operate a slider 95 on a slide bar 94.

The computation processing unit 510 moves and displays the portion 92 based on the travel distance (the moving direction and the moving distance) of the slider 95 by the slide operation. The image data 333, the data of the measurement result 334, and the data of the deviation amount 335, which are correlated with the post-movement position 338 of the portion 92, are read from the panoramic image data 332 of the memory 520, and the image is enlarged and displayed on the display 502 based on the read pieces of data. Therefore, the panoramic image and the graph 911 in Fig. 13 can be scroll-displayed in conjunction with the slide operation.

Although the horizontal axis of the graph 91 indicates the value of the position 338, the horizontal axis may indicate the counter value 336 instead of the position 338.

<Other example of display mode>

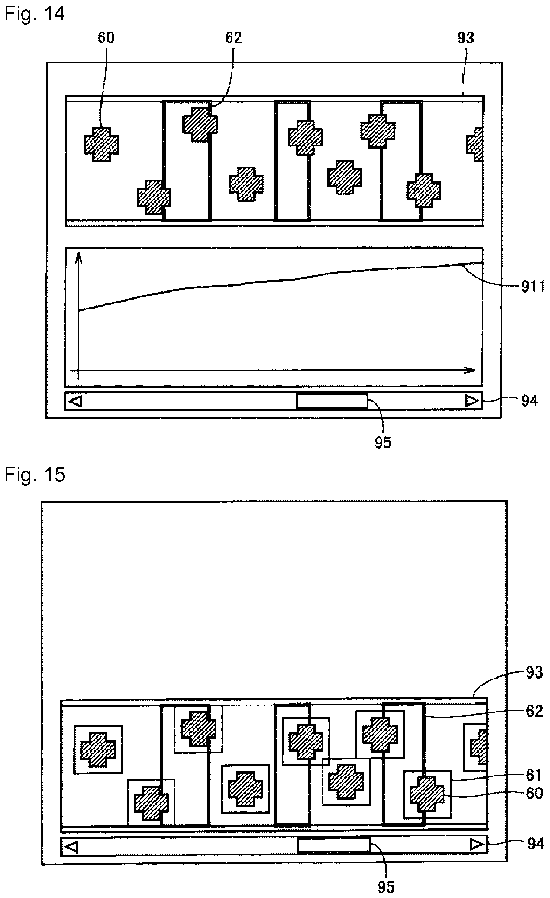

The graph 911 and the panoramic image 93 may have display modes in Figs. 14 to 17.

In Fig. 14, the display of the image 61 of the measurement result is not given in the panoramic image 93 of Fig. 13. In Fig. 15, only the panoramic image 93 is displayed.

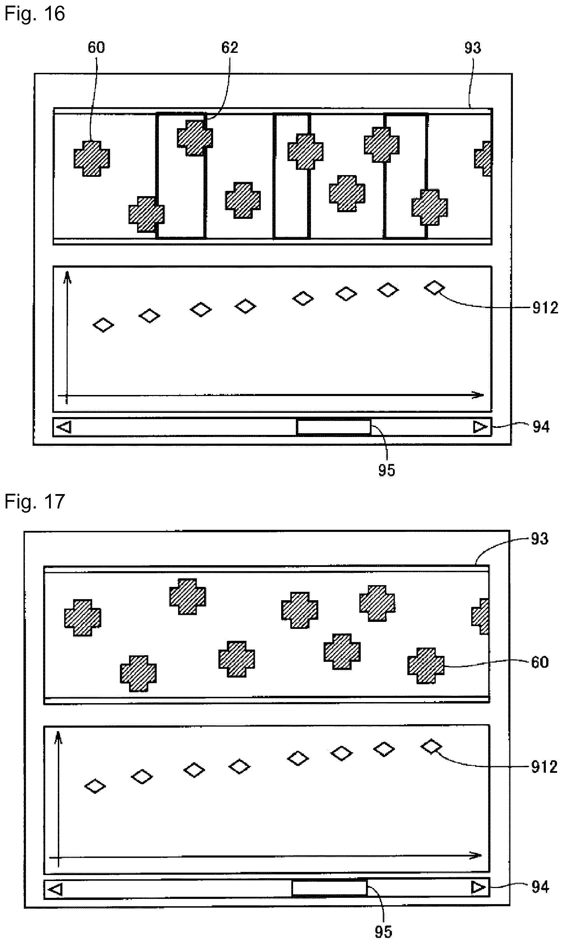

In Fig. 16, instead of the graph 911 in Fig. 11, only the correlation value of the measurement result of each workpiece W is displayed by a point 912 plotted in relation to the image 60 of the upper-stage workpiece W. In Fig. 17, only the image 60 of the workpiece is displayed while the image 62 is eliminated from the panoramic image 93 in Fig.

16. The plotted points 912 may be connected to each other in Fig. 16 or 17.

The operator can switch the image displayed on the display 502 to one of the image in Fig. 13 and the images in Figs. 14 to 17 by operating the operation unit 503.

<Display example in which threshold is used>

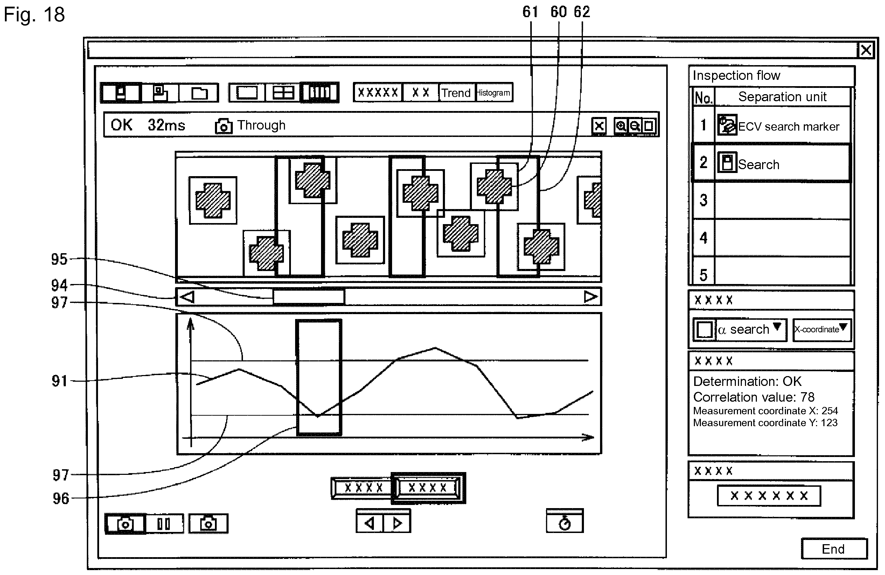

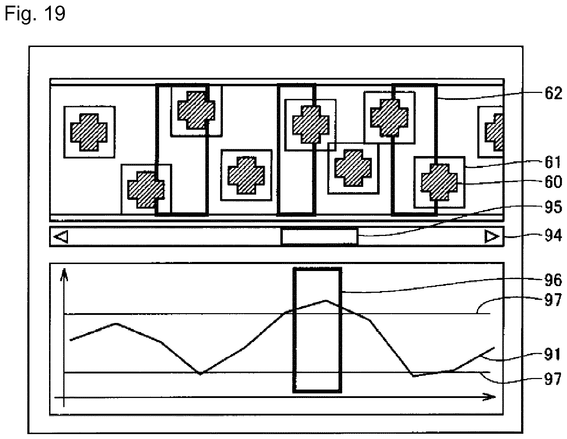

Figs. 18 and 19 illustrate screens on which the measurement result is displayed using the threshold.

In the case that a threshold 97 is set to the measurement result 334, the computation processing unit 510 compares the value (specifically, the correlation value) of each measurement result 334 of the graph 91 to a threshold 97. Based on a comparison result, in the graph 91, the computation processing unit 510 displays an image 96 expressing a portion in the range of the threshold 97 while superimposing the image 96 on the graph 91 (see Fig. 18). For example, the image 96 is displayed by the frame, and the frame is displayed in the mode different from that of the graph 91. For example, the frame differs from the graph 91 in color.

When the operator operates the operation unit 503 while the image 96 is displayed, the computation processing unit 510 displays the image 96 while sequentially moving the image 96 to another portion (in the graph 91, the portion in the range of the threshold 97) of the graph 91.

The image 96 in Fig. 18 indicates the portion in the range of the threshold 97. Alternatively, as illustrated in Fig. 19, the image 96 may indicate a portion out of the range of the threshold 97.

<Display example in which overlapping measurement is eliminated>

In order that the robot 300 accurately holds the workpiece W, it is necessary to eliminate a situation (hereinafter referred to as overlapping measurement) in which the measurement processing is performed at least twice to the identical workpiece W on the line 1. The information assisting the overlapping measurement is displayed in the second embodiment.

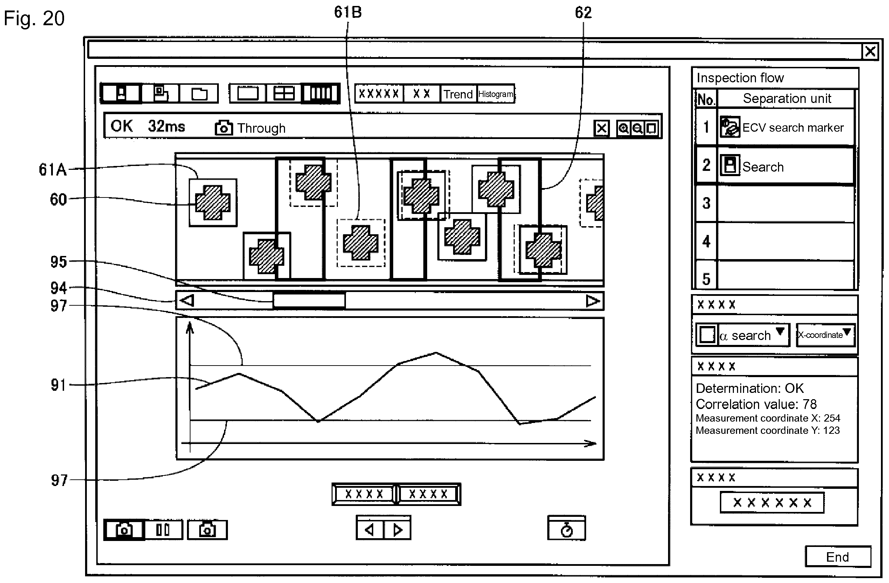

Fig. 20 is a view illustrating an example of the panoramic image for removing the overlapping measurement according to the second embodiment of the present invention. In order that the operator easily checks whether measurement processing is redundantly performed to each workpiece W from the displayed panoramic image, the computation processing unit 510 displays the image 61 based on the measurement result 334 while the even-numbered image and the odd-numbered image in the panoramic image differ from each other in the display mode. For example, in Fig. 20, an image 61A based on the measurement result in the even-numbered image and an image 61B based on the measurement result in the odd-numbered image are displayed in different colors.

<Display example of margin of measurement processing time>

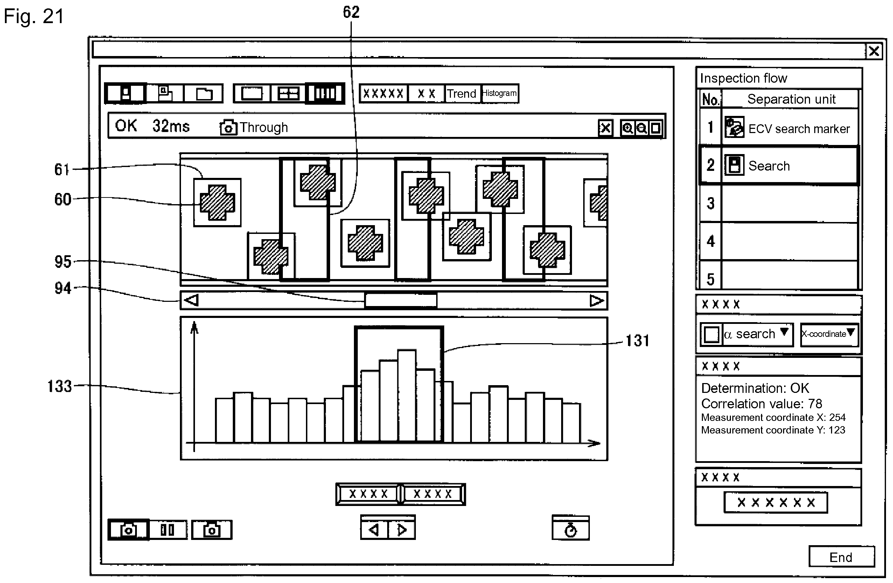

Fig. 21 is a view illustrating a screen example on which a ratio of a measurement processing time to the imaging interval according to the second embodiment of the present invention. In the second embodiment, a degree of margin of the measurement processing time is indicated by the ratio of the measurement processing time to the imaging interval. In order to acquire the ratio, the imaging interval and the measurement processing time are acquired as follows.

The CPU 122 calculates the imaging interval from $((It \times a)/v)$. In this case, It [pulse] is an interval at which the imaging instruction is input, a [mm/pulse] is the conveyer travel distance per pulse, and v [mm/sec] is a conveyer speed. It is assumed that these values are previously stored as the imaging parameter 350 in the memory 124.

The calculated imaging interval is stored as the data of the imaging interval 339 in the table 331 while correlated with the image data 333 acquired by the imaging action.

The measurement processing time means a time from when the measurement processing unit 221 starts the measurement processing to the image data 333 acquired by the one-time imaging action to when the measurement processing unit 221 ends the measurement processing. For example, the time between the beginning and end of the measurement processing means the time from when the measurement processing unit 221 inputs the image data from the imaging unit 110 to when the measurement processing unit 221 outputs the measurement processing result. The time can be acquired such that the CPU 122 performs measurement with a timer (not illustrated). At this point, a measurement processing time T [sec] is used for the sake of convenience.

The ratio acquisition unit 225 acquires the data of the ratio 340. That is, using the imaging interval 339 correlated with the image data 333 and the measurement processing time T, the ratio of the measurement processing time to the imaging interval is calculated from (measurement processing time (T) / imaging interval) with respect to each piece of image data 333 of the panoramic image data 332 of the memory 520. The ratio calculated with respect to each piece of image data 333 is registered as the ratio 340 while correlated with each piece of image data 333 of the panoramic image data 332.

In the operation display device 500, the computation processing unit 510 displays the information based on the ratio 340. Specifically, the image of a graph 133 (see Fig. 21) is generated using the data of the ratio 340, which is received from the captured image processing unit 120 and correlated with each piece of image data 333 of the panoramic image data 332 stored in the memory 520, and the generated graph 133 is displayed on the display 502 through the display controller 540.

Referring to Fig. 21, in the graph 133, the vertical axis indicates the value of the ratio 340, and the horizontal axis orthogonal to the vertical axis indicates the value of the position 338 of each piece of image data 333 of the panoramic image. In the graph 133, the value of the ratio 340 correlated with each piece of image data 333 is displayed by the bar graph. However, the display mode of the value of the ratio is not limited to the bar graph.

According to the calculation formula, the measurement processing of the corresponding image data 333 is not ended within the imaging interval when the value of the ratio 340 is greater than "1", and the measurement processing time has the margin when the value of the ratio 340 is less than "1". Accordingly, from the graph 133, the operator can quickly understand whether the image data 333 in which the measurement processing is not ended within the imaging interval exists in the panoramic image.

The operator can obtain assist information determining whether the value of the variable It [pulse] or the conveyer speed is proper from the graph 133. Specifically, the operator can obtain the information assisting the determination whether the setting is changed such that the value of the variable It [pulse] is decreased or such that the conveyer speed is enhanced.

In the graph 133, the display mode is changed with respect to the portion in which the value of the ratio 340 is greater than "1". For example, the portion is highlighted by surrounding the portion using the frame 131. The color of the bar graph corresponding to each piece of image data 333 may be changed according to the degree of margin of the measurement processing time.

Referring to Fig. 21, when the operator operates the slider 95, the computation processing unit 510 controls the display controller 540 such that the travel distance (the moving direction and the moving distance) of the slider 95 is input, such that the panoramic image is scrolled in conjunction with the input travel distance, and such that the graph 133 is scrolled at the same time.

According to the screen in Fig. 21, the degree of margin of the measurement processing time can be presented. Accordingly, in the case that the operator determines whether the measurement processing time in which the post-change parameter is used has the margin after measurement processing parameter is changed in Step S5 of Fig. 10, the information assisting the determination can be presented. Not only the ratio of the measurement processing time to the imaging interval but also the measurement processing time of itself may be displayed in order to present the degree of margin of the measurement processing time.

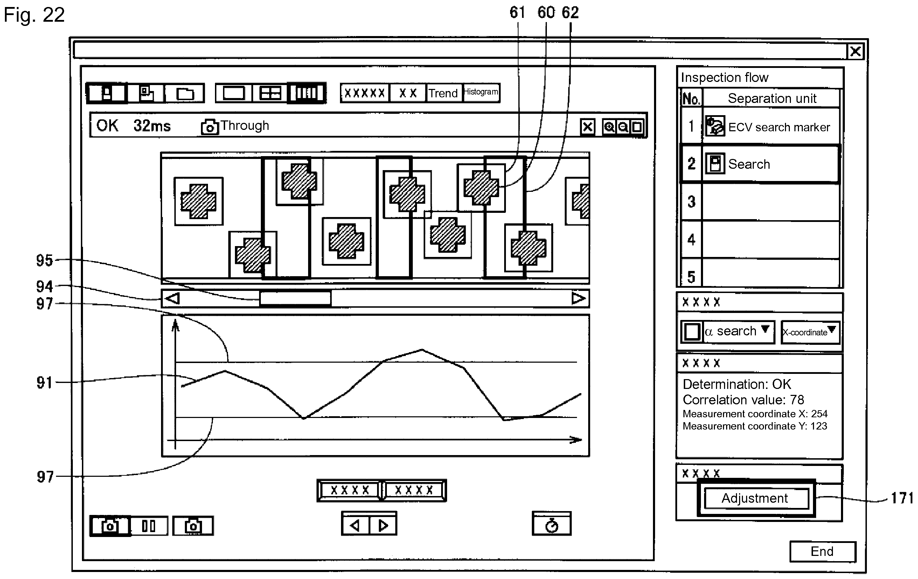

Fig. 22 illustrates a screen example in which the parameter is changed in Step S5. In Fig. 22, the operator can input an instruction to change the measurement processing parameter by operating a button 171 on the screen. When the instruction to change the measurement processing parameter is input, the computation processing unit 510 switches the screen of the display 502 to another screen (not illustrated) used to adjust the parameter. For example, the type of the parameter and the range of the value are displayed on the screen used to adjust the parameter.

<Change of imaging parameter

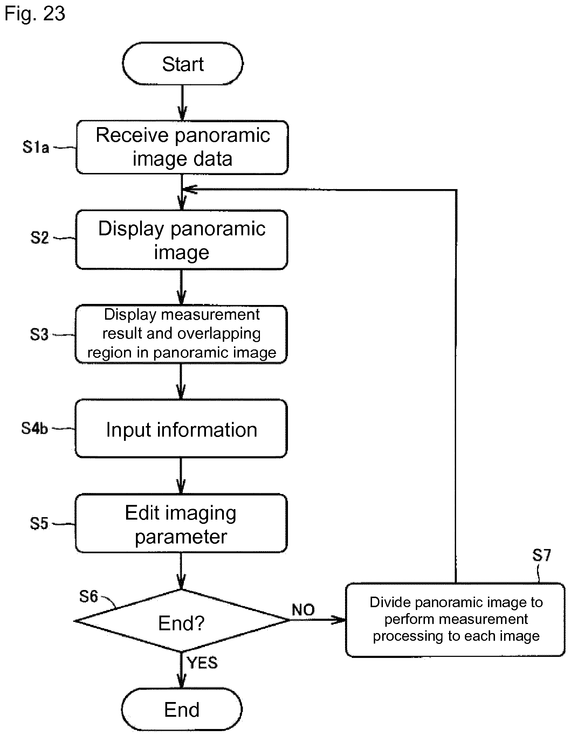

Fig. 23 is a flowchart of processing of changing the imaging parameter according to the second embodiment of the present invention. The measurement processing parameter is changed in Fig. 10, and similarly the parameter related to the imaging action can be changed.

Referring to Fig. 23, the pieces of processing in Steps S1a to S3 are performed similarly to Fig. 10. Therefore, the panoramic image or the graph of the measurement result is displayed on the display 502.

After the display, the operator can input the information for changing the parameter related to the imaging action by operating the operation unit 503 (Step S4b). Specifically, the type of the parameter and the post-change value are input.

The computation processing unit 510 transmits the information for changing the parameter to the captured image processing unit 120 through the communication interface 528.

In the captured image processing unit 120, the imaging parameter update unit 228 updates the imaging parameter 350 of the memory 124 using the received information. For example, the parameter determining the deviation amount M in Fig. 5 can be updated.

The processing is ended when the instruction to check the measurement result using the post-change parameter is not input through the operation unit 503 (YES in Step S6). When the instruction to check the measurement result is input (NO in Step S6), the processing is performed using the post-change parameter (Step S7).

In Step S7, the measurement processing is performed using the post-change parameter. For example, the data of the panoramic image is acquired by simulating the imaging action of the imaging unit 110 at the times of T(n) and T(n+1) after the parameter is updated.

Specifically, the image division unit 229 inputs the post-change counter values T(n) and T(n+1) from the imaging parameter update unit 228, and calculates the deviation amount M according the procedure in Fig. 5 using the values T(n) and T(n+1). The calculated deviation amount is referred to as a post-change deviation amount MM.

Using the post-change deviation amount MM, the image division unit 229 sequentially extracts the panoramic image of the panoramic image data 332 of the memory 124 from the head image data 333 to the final image data 333. Therefore, the panoramic image data 332 can be divided into the plural pieces of image data 333 constituting the panoramic image. Each piece of image data 333 acquired by the division indicates the image data that is acquired when the imaging unit 110 is considered to perform the imaging action at the times of the post-change values T(n) and T(n+1). The acquisition of the image data 333 corresponds to the simulation of the imaging action of the imaging unit 110 at the times of the post-change values T(n) and T(n+1).

Then, the measurement processing unit 221 performs the measurement processing to each piece of image data 333 acquired by the image division unit 229 , and outputs the measurement result 334. The panoramic image data 332 is generated using the output measurement result 334 and the post-change deviation amount MM. Therefore, the post-update panoramic image data is acquired to end the processing in Step S7.

Then the processing goes to Step S2. In Step S2, the post-update panoramic image data is transmitted to the operation display device 500 from the captured image processing unit 120. The computation processing unit 510 of the operation display device 500 displays the post-update panoramic image on the display 502 using the received post-update panoramic image data, and simultaneously displays the image of the overlapping region and the image of the measurement result (Step S3).

The operator can check the measurement result while correlating the measurement result with the post-update panoramic image displayed on the display 502. Therefore, the assist information determining whether the value of the post-update imaging parameter is proper can be obtained.

[Third embodiment]

The display of the panoramic image according to a robot coordinate system in which calibration is performed will be described in the third embodiment.

<Calibration>

The calibration that converts an image coordinate system of the visual sensor 100 into the robot coordinate system of the robot 300 will be described below.

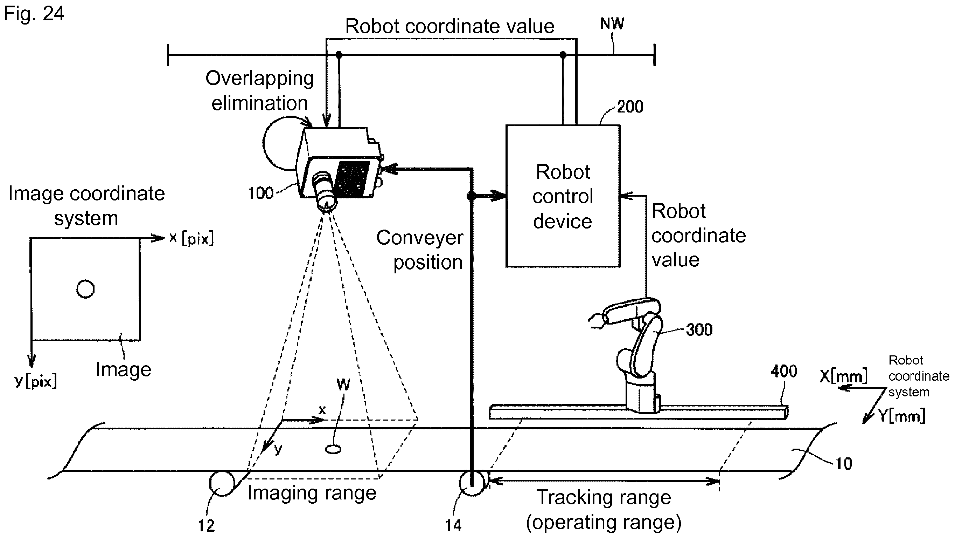

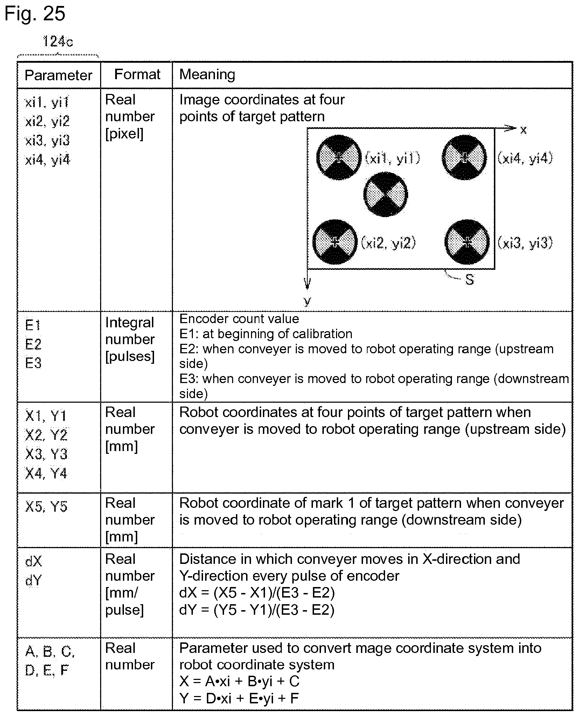

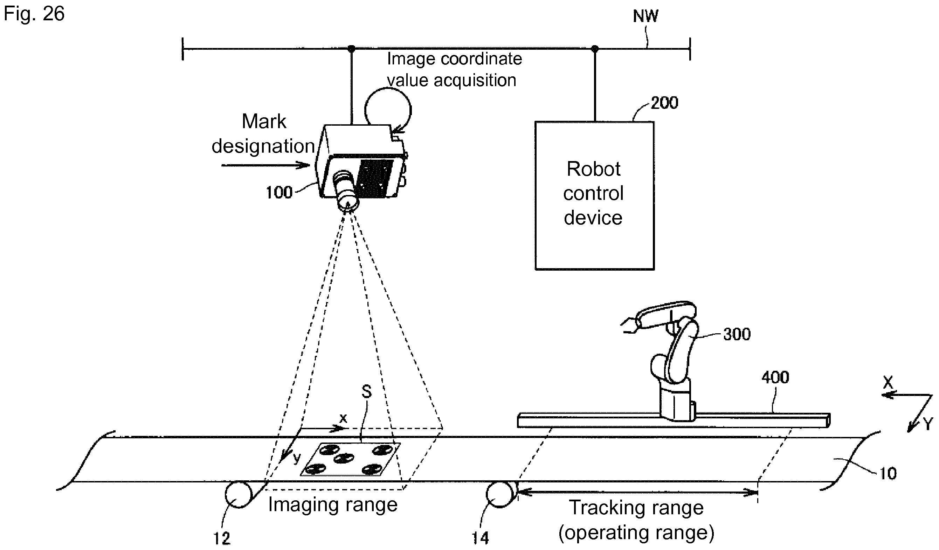

Fig. 24 is a view illustrating the calibration according to the third embodiment of the present invention. Fig. 25 is a view illustrating an example of a parameter set acquired by the calibration shown in Fig. 24. Figs. 26 to 28 are views illustrating the procedure of the calibration according to the third embodiment of the present invention.

Referring to Fig. 24, in the calibration of the third embodiment, the calibration is mainly performed from the following two viewpoints.

(1) Calibration between robot and conveyer:

In the calibration, the conveyer travel distance per pulse included in the pulse signal from the encoder 14 is acquired. The conveyer travel distance corresponds to dX and dY indicated in the second bottom of Fig. 25. As illustrated in Fig. 25, because the conveyer travel distance is a vector quantity, the value is acquired for each axis of the robot coordinate system. The conveyer travel distance is the parameter that is necessary for the robot 300 to receive the pulse signal from the encoder 14 to track the position of the workpiece on the conveyer 10.

(2) Calibration between visual sensor and robot:

A relational expression that converts positional information (a coordinate value (xi, yi) [pixel] of the image coordinate system) on the workpiece measured by the visual sensor 100 into a coordinate value (X, Y) [mm] of the robot coordinate system is acquired. The relational expression is defined by six parameters A to F indicated at the lowermost stage in Fig. 25.

As illustrated in Fig. 24, because the positional information (a robot coordinate value) on the robot 300 is necessary to perform the calibration, the positional information is transferred to the visual sensor 100 from the robot control device 200 through the network NW.

The calibration procedure will be described in detail below. In the conveyer system of the third embodiment, even if the user does not understand a meaning of the calibration, the user can easily perform the calibration only by performing the operation according to the designated procedure. More specifically, the calibration of the third embodiment is performed by a three-stage procedure in Figs. 26 to 28.

A calibration sheet S in which a target pattern illustrated at the uppermost stage in Fig. 25 is drawn is used in the calibration of the third embodiment. The target pattern illustrated in the calibration sheet S includes five circles (marks) in each of which an inside is two-toned by about 90°. The calibration is basically performed using the four marks as described later. The additionally-disposed mark is used to align the calibration sheet S with a predetermined direction.

(First stage)

At a first stage, as illustrated in Fig. 26, the user disposes the calibration sheet S in which the target pattern is drawn in the visual field of the visual sensor 100 (the imaging unit 110). The user provides the imaging instruction to the visual sensor 100. The visual sensor 100 performs the measurement processing to the image (the image including the target pattern as the subject) obtained by the imaging, and determines a coordinate value of a center point of each of the four marks disposed at four corners included in the target pattern . Therefore, the coordinate value [pixel] of the image coordinate system is acquired for each of the four marks included in the target pattern. The four acquired coordinate values correspond to (xi1, yi1), (xi2, yi2), (xi3, yi3), and (xi4, yi4) indicated at the uppermost stage in Fig. 25.

(Second stage)

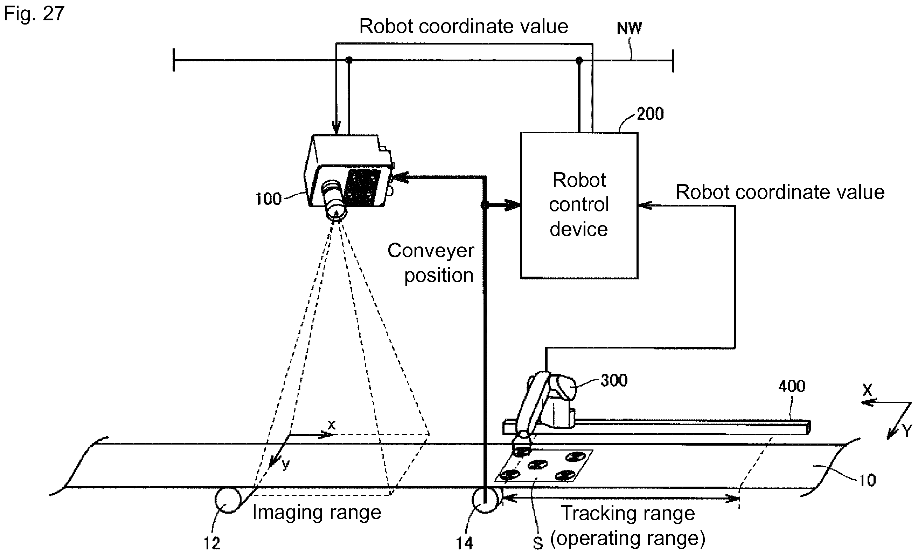

At a second stage, as illustrated in Fig. 27, the user moves the conveyer 10 to dispose the calibration sheet S in which the target pattern is drawn within the tracking range (the operating range) of the robot 300, and operates the robot 300 to obtain the positional relationship between the four marks included in the target pattern and the robot 300.
More specifically, the user moves the conveyer 10 to dispose the calibration sheet S within the tracking range (the operating range) of the robot 300. It is assumed that the count value before the movement of the conveyer 10 (at the beginning of the calibration) is previously acquired. The count value corresponds to an encoder count value E1 (at the beginning of the calibration) indicated in the second top of Fig. 25.
Then, by operating a teaching pendant (not illustrated) attached to the robot control device 200, the user positions a front end of a hand of the robot 300 such that the front end of the hand of the robot 300 is opposed to one of the marks on the calibration sheet S. The user provides the instruction in the positioned state to transmit the positional information (the coordinate value of the robot coordinate system indicating the position of the front end of the hand of the robot 300) on the robot 300, which is possessed by the robot control device 200, to the visual sensor 100. The processing of positioning the front end of the hand of the robot 300 to transmit the positional information on the robot 300 to the visual sensor 100 is repeatedly performed to all the four marks included in the target pattern.
The positional information on the robot 300 corresponding to each of the four marks included in the target pattern is acquired by the above procedure. The pieces of positional information on the robot 300 corresponding to the acquired four marks correspond to (X1, Y1), (X2, Y2), (X3, Y3), and (X4, Y4) indicated in the third top of Fig. 25.
As illustrated in Fig. 27, the state in which the calibration sheet S is disposed within the tracking range (the operating range) of the robot 300 is maintained until the pieces of positional information on the robot 300 corresponding to the four marks are transmitted to the visual sensor 100.
The count value in the state of Fig. 27 is also stored in the visual sensor 100. The count value corresponds to an encoder count value E2 (when the conveyer is moved to the robot operating range (the upstream side)) indicated in the second top of Fig. 25.

(Third stage)

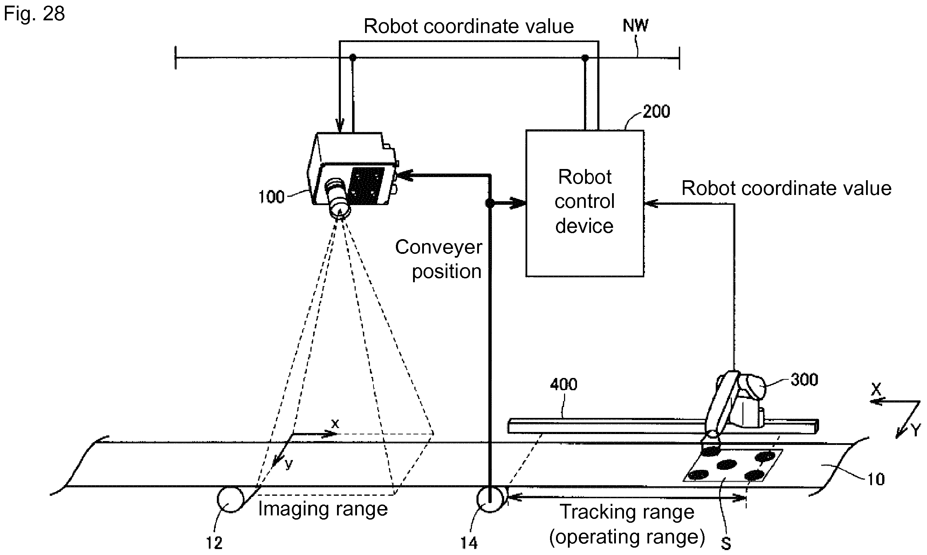

At a third stage as illustrated in Fig. 28, the user further moves the conveyer 10 to dispose the calibration sheet S to the most downstream position in the tracking range (the operating range) of the robot 300, and operates the robot 300 to obtain the positional relationship between the one mark included in the target pattern and the robot 300.
More specifically, the user moves the conveyer 10 to dispose the calibration sheet S in the position of the end portion on the downstream side in the tracking range (the operating range) of the robot 300.
Then, by operating the teaching pendant (not illustrated), the user positions the front end of the hand of the robot 300 such that the front end of the hand of the robot 300 is opposed to the first mark (the mark in which the coordinate value (X1, Y1) is acquired at the second stage) on the calibration sheet S. The user provides the instruction in the positioned state to transmit the positional information (the coordinate value of the robot coordinate system indicating the position of the front end of the hand of the robot 300) on the robot 300, which is possessed by the robot control device 200, to the visual sensor 100.
The positional information on the robot 300 corresponding to the first mark included in the target pattern is acquired by the above procedure. The positional information on the robot 300 corresponding to the acquired first mark correspond to (X5, Y5) indicated in the fourth top of Fig. 25.
The count value in the state of Fig. 28 is also stored in the visual sensor 100. The count value corresponds to an encoder count value E3 (when the conveyer is moved to the robot operating range (the downstream side)) indicated in the second top of Fig. 25.

(Parameter calculation processing)

Workpiece travel distances dX and dY per count from the encoder 14 are calculated using the parameters acquired by the pieces of processing at the first to third stages. More specifically, the workpiece travel distances dX and dY are calculated according to the following equations.

$$dX = (X5 - X1)/(E3 - E2)$$

$$dY = (Y5 - Y1)/(E3 - E2)$$

These equations mean that a change amount of the positional information of the robot 300 to a change amount of the count value, which is generated when the front end of the hand of the robot 300 is positioned to the identical mark in the calibration sheet S, is calculated between the state in Fig. 27 and the state in Fig. 28. The workpiece travel distanced dX and dY per count are determined by the calculation equations. That is, the calibration between the robot and the conveyer is performed.

The six parameters A to F of the conversion formulas related to the conversion of the coordinate system are determined based on a correspondence relationship between the coordinate values (xi1, yi1), (xi2, yi2), (xi3, yi3), and (xi4, yi4) of the camera coordinate system acquired in Fig. 26 and the coordinate values (X1, Y1), (X2, Y2), (X3, Y3), and (X4, Y4) of the robot coordinate system acquired in Fig. 27. That is, the parameters A to F satisfying the following equations (or in which an error is minimized) are determined using a well-known technique.

$$X = A{\cdot}xi + B{\cdot}yi + C$$

$$Y = D{\cdot}xi + E{\cdot}yi + F$$

Therefore, the calibration between the visual sensor and the robot are performed.

When the parameters A to F are determined, the CPU 122 may convert the panoramic image of the camera coordinate system into the coordinate value of the robot coordinate system using the parameters A to F. Therefore, the disposition of the workpiece W on the conveyance path can be presented to the operator at the time when the robot 300 holds the workpiece W.

More specifically, each workpiece position (coordinate value) indicated by the measurement result 334 of the panoramic image data 332 is converted into the coordinate value of the robot coordinate system using the parameters A to F, and the image 60 of each workpiece is displayed in the panoramic image according to the post-conversion coordinate value. Therefore, the disposition of the workpiece W on the conveyance path can be presented at the time when the robot 300 holds the workpiece W.

[Fourth Embodiment]

In the present embodiment, the measurement result 334 of the immediately previously captured image data 333 is superimposed as a measurement result of the currently captured image data 333 to generate and display a panoramic image. As a result, it is possible to display a measurement result even in a portion where images overlap each other.

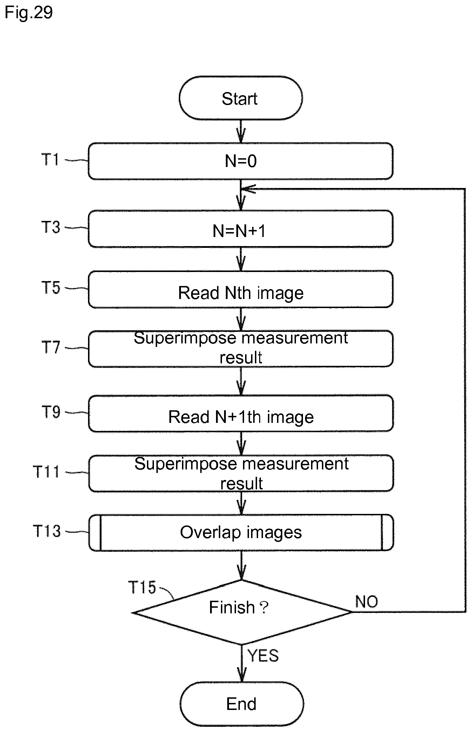

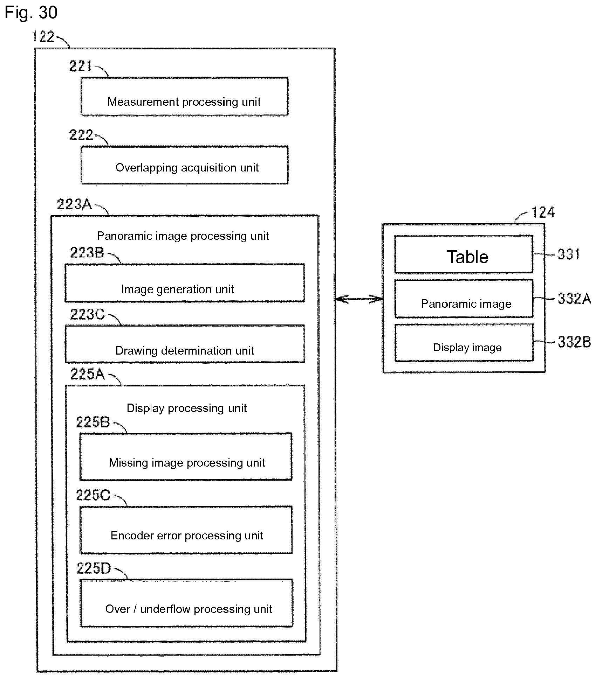

Fig. 29 is a flowchart of a process according to the fourth embodiment of the present invention. Fig. 30 is a schematic diagram showing a functional configuration for processing a captured image according to the fourth embodiment of the present invention. While it is assumed that each function shown in Fig. 30 is implemented by the captured image processing unit 120's CPU 122 executing a program stored in advance in the memory 124, the function may be implemented not only by the program but also by the program and a circuit in combination.

The captured image processing unit 120 executes a variety of types of programs, which are stored in the CD-ROM 136 and thus distributed. The programs stored in the CD-ROM 136 are read by a memory interface 135 having a function to drive a CD-ROM (compact disk-read only memory), and stored to the memory 124 or the like. Alternatively, a configuration may be made to download the programs from a higher-level host computer or the like through the network NW.

The CPU 122 has a processing function for a panoramic image. Specifically, it includes a measurement processing unit 221 that performs a measurement-processing of a workpiece for a captured image, an overlap acquisition unit 222 that acquires an overlapping range of images of a panoramic image, and a panoramic image processing unit 223A that performs processing related to generating and displaying the panoramic image. The measurement processing unit 221 and the overlap acquisition unit 222 are the same as those described with reference to Fig. 3, and accordingly, will not be described.

The panoramic image processing unit 223A includes an image generation unit 223B for generating a panoramic image having images overlapping each other in an overlapping range, a rendering determination unit 223C which determines whether or not to render a measurement result in an image, and a display processing unit 225A for processing errors associated with generating or displaying the panoramic image.

The display processing unit 225A includes a missing image processing unit 225B, an encoder error processing unit 225C, and an over/underflow processing unit 225D. These units will more specifically be described later.

<Generating Panoramic Image>

Upon receiving a monitor instruction, the panoramic image processing unit 223A generates a panoramic image to be displayed according to the flowchart of Fig. 29. In this flowchart, for the sake of illustration, a variable N is used for counting the image data 333 constituting a panoramic image. It is assumed that in the table 331, data is stored as shown in Fig. 4.

Referring to Fig. 29, initially, the panoramic image processing unit 223A initializes the variable N to a value of 0 (step T1), and subsequently updates the variable N to (N = N + 1) (step T3).

Subsequently, the image generation unit 223B reads from the table 331 the image data 333 indicated by the value of the variable N (step T5), and overlays on the read image data 333 the image data of the measurement result 334 corresponding thereto (step T7). Subsequently, the image generation unit 223B reads from the table 331 the image data 333 indicated by the value of (N + 1) (step T9) and overlays on the read image data 333 the image data of the measurement result 334 corresponding thereto (step T11).

Thereafter, the image generation unit 223B superimposes the measurement result 334 of the Nth image data 333 as a measurement result of the overlaid (N + 1)th image data 333 to superimpose and display on each other both image data 333 overlaid as described above to generate a panoramic image (step T13). For example, the measurement result 334 of first image data 333 is processed to be superimposed as a measurement result of second image data 333.

Thereafter, based on the value of the variable N, the panoramic image processing unit 223A determines whether panoramic image data 332 using the image data 333 for a predetermined number of images has been generated (step T15). If not (NO in step T15), the control returns to step T3 and updates the value of the variable N to (N + 1).

Thereafter, by performing the subsequent process in the same manner, in step T13 for example the measurement result 334 of the second image data 333 is processed to be superimposed as a measurement result of third image data 333.

In this way, by using the first, second, third ... image data 333 indicated by the variable N, the measurement result 334 of the Nth image data 333 is thus superimposed as a measurement result 334 of the (N + 1)th image data 333 to generate panoramic image data 332A which is in turn stored in the memory 124.

When it is determined that the generation is completed (YES in step T15), generating the panoramic image ends.

Subsequently, the generated panoramic image data 332A is read from the memory 124 and transmitted to the operation display device 500. In the operation display device 500, the computation processing unit 510 displays the received panoramic image data 332A on the display 502.

In this embodiment, for the sake of simplicity of illustration, while how the superimposing region is displayed is not specifically described, the superimposing region can be displayed for example as shown in Figs. 8(A) to 8(C), as has been previously described.

A process (step T13) will now be described that is performed by the image generation unit 223B to superimpose the measurement result 334 of the Nth image data 333 as a measurement result of the (N + 1)th image data 333 overlaid.

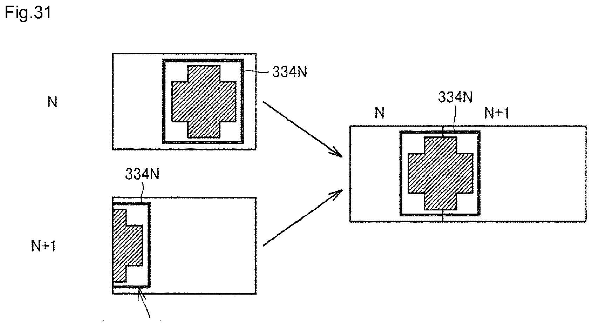

Referring to Fig. 31, the image generation unit 223B superimposes a measurement result 334N of the Nth image data 333 as a measurement result of the (N + 1)th image data 333.

Specifically, in superimposing the measurement results, the image generation unit 223B initially calculates necessary data (or value) for creating a panoramic image.

For the calculation are used a counter value Trc [count] of the encoder counter 132 when capturing an image, an amount of movement for one pulse (calibration data): ($\Delta X$, $\Delta Y$) [mm/count], and calibration parameters:

$$X \text{ [mm]} = Ax + By + C \ldots \quad \text{Expression (1)}$$

and

$$Y \text{ [mm]} = Dx + Ey + F \ldots \text{Expression (2)}.$$

Further, from the calibration parameters, expressions (3) and (4) indicated below, which inversely transform [mm] to [pixel], are generated from expressions (1) and (2), as follows:

$$x \text{ [pixel]} = \{E(X - C) - B(Y - F)\}/(AE - BD) \ldots (3)$$

$$y \text{ [pixel]} = \{A(Y - F) - D(X - C)\}/(AE - BD) \ldots (4)$$

Further, an imaging trigger interval $\Delta Tr$, which is an interval for which an imaging instruction is input, is calculated. That is, the imaging trigger interval $\Delta Tr = Trc(N + 1) - Trc(N)$ is calculated where $Trc(N)$ [count] represents an encoder counter value when capturing the Nth image and $Trc(N + 1)$ [count] represents an encoder counter value when capturing the (N + 1)th image.

Accordingly, using a value calculated through calibration according to the robot coordinate system described above, an amount of movement from the Nth image to the (N + 1)th image can be calculated as follows:

That is, the amount of movement from the Nth image to the (N + 1)th image can be defined by $\Delta Tr(\Delta X, \Delta Y)$ [mm], and to convert the Nth image's measurement result $(X(n), Y(n))$ to robot coordinates $(X'(n), Y'(n))$ for the (N + 1)th image, conversion can done as follows:

$$X'(n) = X(n) + \Delta Tr \times \Delta X$$

and

$$Y'(n) = Y(n) + \Delta Tr \times \Delta Y.$$

To convert the robot coordinates' value in pixels, conversion can be done through expressions (3) and (4), as follows:

$$F'x = \{E(X'(n) - C) - B(Y'(n) - F)\}/(AE - BD),$$

and

$$F'y = \{A(Y'(n) - F) - D(X'(n) - C)\}/(AE - BD).$$

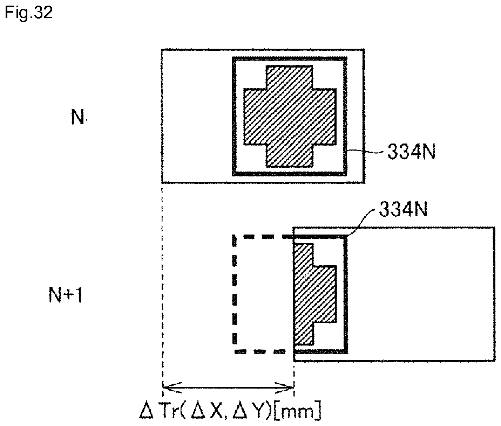

Following the above calculation result, the image generation unit 223B sets the coordinates of the measurement result 334N of the Nth image as $(F'x, F'y)$ and renders the image of the measurement result 334N in image data 333N of the (N + 1)th image (see Fig. 32). This generates the (N + 1)th image's image data 333 with the Nth image's measurement result 334N superimposed thereon.

Thus, the panoramic image data 332A can be generated such that each image data 333 includes the measurement result 334N. The panoramic image displayed according to the panoramic image data 332A never has a measurement result partially disappearing (or not displayed) at a portion where images overlap each other, and the measurement results for the Nth and (N + 1)th images can all be displayed. This eliminates the necessity of managing a panoramic image and a measurement result individually and thus facilitates data management, and furthermore, allows a process from starting displaying a panoramic image to ending doing so to be done in a short period of time.

<Determining whether to render measurement result>

In the processing described above, on the premise that the coordinates of the measurement result 334N for the Nth image are located within the range of the image data 333 of the (N + 1)th image, the image generation unit 223B generates image data for the (N + 1)th image with the Nth image's measurement result 334N superimposed thereon. However, the coordinates of the figure of the measurement result 334N of the Nth image may deviate from the range of the image data 333 of the (N + 1)th image in some cases.

Accordingly, in the present embodiment, the rendering determination unit 223C determines whether the coordinates (F'x, F'y) of the figure of the measurement result of the Nth image deviate from the range of the (N + 1)th image. If the rendering determination unit 223C so determines, the image generation unit 223B determines that the measurement result of the Nth image according to the coordinates (F'x, F'y) is not rendered in the image data of the (N + 1)th image, and the image generation unit 223B skips rendering that measurement result.

The process for determination by the rendering determination unit 223C can be varied for each type of figure represented by the image 61 of the measurement result. The figure represented by the image 61 of the measurement result 334N will be described by referring by way of example to a rectangle, an ellipse, and a circle having a line segment having a predetermined width. For the sake of illustration, a single image's image data 333 has an image size of 480 pixels $\times$ 752 pixels.

- Rectangle

When the upper left coordinates and lower right coordinates of a rectangle represented by the image 61 of the measurement result 334N of the Nth image is converted in pixels by using the robot coordinates of the (N + 1)th image to obtain upper left coordinates (xa, ya) and right lower coordinates (xb, yb), and it is determined that the coordinates (xa, ya) and the coordinates (xb, yb) do not satisfy any of the conditions represented by the four inequalities indicated below, the image generation unit 223B determines that rendering is avoided, whereas when it is determined that at least one of the conditions is satisfied, the image generation unit 223B determines that rendering is performed.

$0 \leq xa \leq 752$, $0 \leq xb \leq 752$, $0 \leq ya \leq 480$, and $0 \leq yb \leq 480$

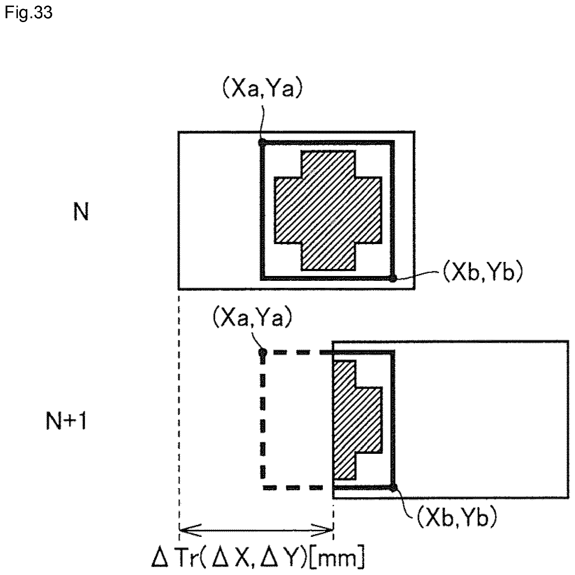

For example, in the case of Fig. 33, the rendering determination unit 223C determines that the coordinates (xb, yb) satisfy ($0 \leq xb \leq 752$) and ($0 \leq yb \leq 480$) of the above four conditions, and following the determination, the image generation unit 223B determines that the measurement result of the Nth image according to the coordinates (F'x, F'y) is rendered in the image data of the (N + 1)th image, and the measurement result 334N of the Nth image according to the coordinates (F'x, F'y) is rendered in the (N + 1)th image.

- Ellipse

When the coordinates of the image of an ellipse indicating the measurement result 334N of the Nth image is converted in pixels by using the robot coordinates of the (N + 1)th image, and thus obtained as center coordinates (Cx, Cy), and a radius rx in the direction x and a radius ry in the direction y, and it is determined that these values do not satisfy any of the conditions represented by the two inequalities indicated below, the image generation unit 223B determines that rendering is avoided, whereas when it is determined that at least one of the conditions is satisfied, the image generation unit 223B determines that rendering is performed.

$0 \leq Cx \pm rx \leq 752$, and $0 \leq Cy \pm ry \leq 480$

- Circle with line segment having width

When the coordinates of the image of a circle represented by the Nth image 61 is converted in pixels by using the robot coordinates of the (N + 1)th image, and thus obtained as center coordinates (Cx, Cy), a radius r, and a predetermined line width w, and it is determined that these values do not satisfy any of the conditions represented by the two inequalities indicated below, the image generation unit 223B determines that rendering is avoided, whereas when it is determined that at least one of the conditions is satisfied, the image generation unit 223B determines that rendering is performed.

$0 \leq Cx \pm (r + w) \leq 752$, and $0 \leq Cy \pm (r + w) \leq 480$

(Processing for displaying panoramic image)

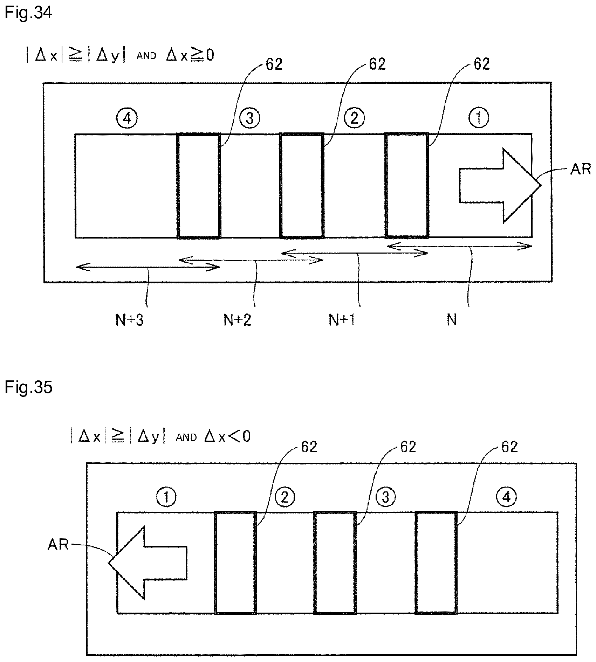

The panoramic image processing unit 223A according to the present embodiment switches a manner of displaying a panoramic image in accordance with the count mode of the encoder counter 132. Specifically, the panoramic image is displayed in one of the display modes shown in Figs. 34 to 37.

When the workpiece W moves in the conveying direction of the line 1 of the conveyor, the encoder counter 132 has the count mode set to either an up-count mode or a down-count mode in advance, and the set mode's value is stored in the memory 124 for example.

The panoramic image processing unit 223A determines a manner of displaying a panoramic image from an amount of movement $\Delta x$ and $\Delta y$ on an image per unit time, that is, per pulse.

Here, how the amount of movement $\Delta x$ and $\Delta y$ is calculated will be described. Initially, the amount of movement for 1 pulse (or calibration data) is represented as $(\Delta Ex, \Delta Ey)$ [mm/count], and converted in pixels in accordance with inverse conversion expressions converting [mm] to [pixel], as below:

$$x \text{ [pixel]} = \{E(X - C) - B(Y - F)\}/(AE - BD),$$

and

$$y \text{ [pixel]} = \{A(Y - F) - D(X - C)\}/(AE - BD).$$

Subsequently, the inverse conversion expressions are used to calculate a position on an image for a fixed pulse (e.g., 0 pulse, 1 pulse).

The amount of movement for 0 pulse is calculated as follows:

$$x0 \text{ [pixel]} = \{E(\Delta Ex \times 0 - C) - B(\Delta Ey \times 0 - F)\}/(AE - BD),$$

and

$$y0 \text{ [pixel]} = \{A(\Delta Ey \times 0 - F) - D(\Delta Ex \times 0 - C)\}/(AE - BD).$$

The amount of movement for 1 pulse is calculated as follows:

$$x1 \text{ [pixel]} = \{E(\Delta Ex \times 1 - C) - B(\Delta Ey \times 1 - F)\}/(AE - BD),$$

and

$$y1 \text{ [pixel]} = \{A(\Delta Ey \times 1 - F) - D(\Delta Ex \times 1 - C)\}/(AE - BD).$$

The amounts of movements calculated for the fixed pulses as described above are used to calculate the amount of movement $\Delta x$ and $\Delta y$ in pixels on an image per pulse. That is, the panoramic image processing unit 223A calculates $\Delta x = x1 - x0$ and $\Delta y = y1 - y0$ when the mode's value in the memory 124 indicates "up-count," whereas the panoramic image processing unit 223A calculates $\Delta x = x0 - x1$ and $\Delta y = y0 - y1$ when the mode's value in the memory 124 indicates "down-count."

The panoramic image processing unit 223A uses the amount of movement $\Delta x$ and $\Delta y$ in pixels, as calculated as described above, to set in display mode data 332B a value indicating a manner of displaying a panoramic image as any one of Figs. 34 to 37, and stores the display mode data 332B in the memory 124.

In other words, when the panoramic image processing unit 223A determines that, of the axes of the robot coordinate system, the amount of movement $\Delta X$ in the direction in which the X axis extends (hereinafter referred to as the X direction) is equal to or more than the amount of movement $\Delta Y$ in the direction in which the Y axis extends (hereinafter referred to as the Y direction), the panoramic image processing unit 223A sets in the display mode data 332B a value indicating a display mode in which a panoramic image extends in the lateral direction of the display 502 (see Figs. 34 and 35). In that case, for $(\Delta x \geq 0)$, a value indicating a display mode in which images are displayed on display 502 for example such that the images are disposed from the right side of the display in an order in which the images are captured is set in the display mode data 332B (see Fig. 34), whereas for $(\Delta x < 0)$, a value indicating a display mode in which images are displayed on display 502 for example such that the images are disposed from the left side of the display in an order in which the images are captured is set in the display mode data 332B (see Fig. 35).

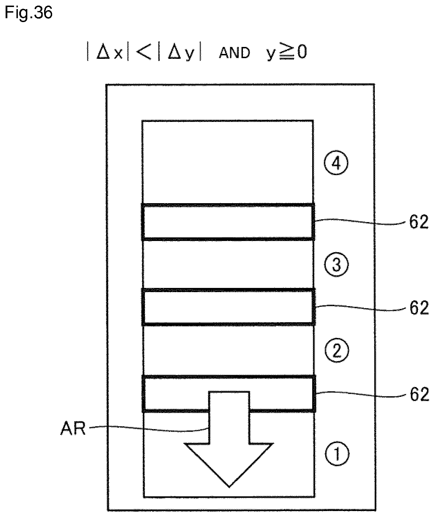

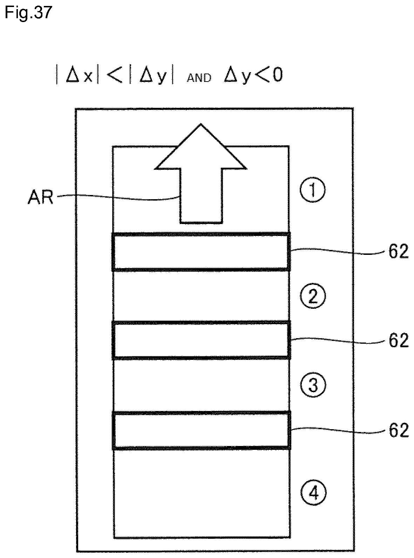

In contrast, when the panoramic image processing unit 223A determines that the amount of movement ΔX in the X direction is smaller than the amount of movement ΔY in the Y direction, the panoramic image processing unit 223A sets in the display mode data 332B a value indicating a display mode in which a panoramic image extends in the longitudinal direction of the display 502 (see Figs. 36 and 37). In that case, for (Δy ≥ 0), a value indicating a display mode in which images are displayed on display 502 for example such that the images are disposed from the bottom side of the display in an order in which the images are captured is set in the display mode data 332B (see Fig. 36), whereas for (Δy < 0), a value indicating a display mode in which images are displayed on display 502 for example such that the images are disposed from the top side of the display in an order in which the images are captured is set in the display mode data 332B (see Fig. 37).

The display mode data 332B having a value set by the panoramic image processing unit 223A is read from the memory 124 together with the panoramic image data 332A and transmitted to the operation display device 500. In the operation display device 500, the computation processing unit 510 displays the received panoramic image data 332A on the display 502 in a mode following the display mode data 332B received in association to that panoramic image data 332A. Thus, a panoramic image can be displayed in any of the modes of Figs. 34 to 37 in accordance with a direction in which the workpiece W moves and an amount by which the workpiece W moves in the robot coordinate system.

Note that the circled numerical values indicated in Figs. 34 to 37 indicate the order of capturing images constituting the panoramic image, and an arrow AR indicates a direction in which the panoramic image has images arranged, and is indicated for the sake of illustration and not displayed on the display 502.

<Error processing>

In the present embodiment, the display processing unit 225A processes an error that occurs when a panoramic image is generated or displayed as described above. Hereinafter, the error is exemplified by an error caused as an image to be used to generate a panoramic image is lacked, and an error attributed to the encoder counter 132.

(Missing-image processing)

When one or more images are missing from a plurality of images to constitute a panoramic image and the latter thus lacks the former, the missing image processing unit 225B omits the image data 333 of the missing image(s) or its/their measurement result(s) 334 in the panoramic image data 332A. An image is missed for example when the visual sensor 100 fails to receive an imaging instruction.

In the present embodiment, whenever the visual sensor 100 receives the imaging instruction from the robot control device 200, the visual sensor 100 captures an image in response to the received imaging instruction. The robot control device 200 counts pulses included in a pulse signal issued from the encoder 14, and transmits the imaging instruction to the visual sensor 100 when a number of pulses equal to or larger than a predetermined value is input. Thus the visual sensor 100 is controlled to capture images at predetermined intervals so that the image data 333 is repeatedly acquired at the intervals. Thus, a series of image data 333 constituting a panoramic image can be obtained.

When CPU 122 of the visual sensor 100 is in a busy state and the imaging instruction is transmitted from the robot control device 200, the visual sensor 100 cannot receive the imaging instruction, and as a result, the image data 333 corresponding to the missed imaging instruction cannot be obtained and the series of image data 333 constituting the panoramic image loses image data 333 corresponding to the missed imaging instruction.

When the missing image processing unit 225B determines that the amount of movement (Δx, Δy) in pixels as calculated as described above indicates the size of one image or larger, the missing image processing unit 225B detects that an image is missing. That is, when the missing image processing unit 225B determines that the amount of movement (Δx, Δy) satisfies either one of (|Δx| ≥ 752) and (|Δy| ≥ 480), the missing image processing unit 225B detects that an image is missing.

When the missing image processing unit 225B detects that an image is missing, the missing image processing unit 225B processes the panoramic image data 332A so as to omit the missing image data 333. Alternatively, in place of the missing image data 333, information using a count value of the encoder counter 132 is inserted into the panoramic image data 332A.

In addition, displaying the image 61 of the measurement result 334N of the missing image is omitted. That is, assuming in Fig. 32 that the Nth image is missing, the panoramic image data 332A is generated without displaying the image 61 of the measurement result 334N of the Nth image nor superimposing the image 61 of the measurement result 334N of the (N - 1)th image on the (N + 1)th image.

(Encoder error processing)

As has been discussed above, the amount of movement (Δx, Δy) is calculated using the count value of the encoder counter 132, and accordingly, when the encoder counter 132 does not normally operate, an error-processing related to generating a panoramic image is performed.

When the encoder error processing unit 225C determines that the same value is received three times or more from the encoder counter 132 in capturing images, the encoder error processing unit 225C detects that the encoder counter 132 is not counting. When the encoder error processing unit 225C detects that the encoder counter 132 is not counting, the encoder error processing unit 225C notifies the operation display device 500 to output an error message on the display 502, and ends the panoramic image display process.

(Overflow/underflow of counter value)

As has been discussed above, the amount of movement ($\Delta$x, $\Delta$y) is calculated using the count value of the encoder counter 132, and accordingly, when the counter value of the encoder counter 132 overflows or underflows, the over/underflow processing unit 225D performs an error-processing related to generating a panoramic image. Note that there is a possibility that the encoder counter 132 may overflow when up-counting and may underflow when down-counting.

The over/underflow processing unit 225D uses a difference between counter values of the encoder counter 132 to determine whether an overflow or an underflow has occurred.

More specifically, when counter values in capturing images are represented as Trc(N) and Trc(N - 1), a difference $\Delta$Trc(N) = Trc(N) - Trc(N - 1) can be obtained.

In up-counting, when the difference $\Delta$Trc(N) satisfies ($\Delta$Trc(N) < 0) it is determined that an overflow has occurred, whereas in down-counting, when the difference $\Delta$Trc(N) satisfies ($\Delta$Trc(N) > 0) it is determined that an underflow has occurred.

Upon determining that an overflow or an underflow has occurred, the over/underflow processing unit 225D corrects the imaging trigger interval $\Delta$Tr in accordance with an expression indicated below. Note that the value of the encoder counter 132 is not rewritten.

$$Trc(N) = Trc(N) - Sgn\{\Delta Trc(N)\} \times Max\_count + 1$$

Note that the above variable Max_count is the maximum count value of the encoder counter 132, and indicates a predetermined value. The value of the variable Max_count is previously stored in a predetermined area of the memory 124.

Thus, when an overflow or an underflow has occurred, the encoder counter value Trc(N) is corrected to a value excluding an error attributed to the overflow or the underflow, and the corrected encoder counter value Trc(N) is used to calculate the imaging trigger interval $\Delta$Tr. An amount of movement $\Delta$x and $\Delta$y having eliminated the error attributed to the overflow or the underflow, can thus be obtained.

<Example of Displaying Panoramic Image>

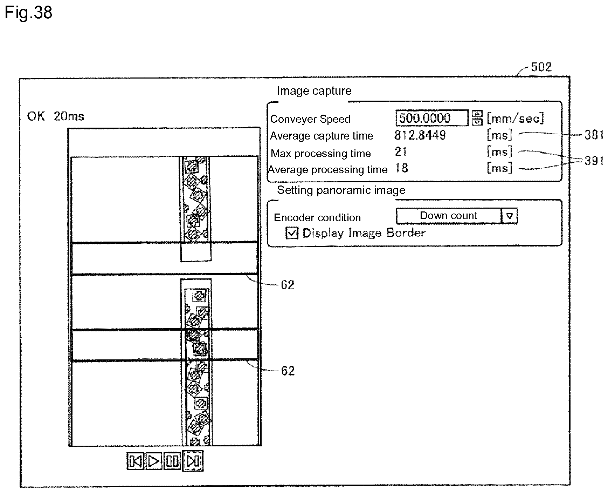

Fig. 38 shows an example of displaying a panoramic image on the display 502 according to Fig. 36 or 37, and Fig. 39 shows an example of displaying a panoramic image on the display 502 according to Fig. 34 or 35.

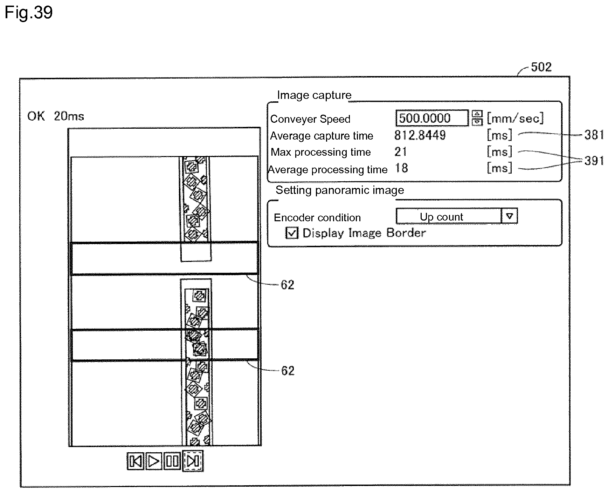

With reference to Figs. 38 and 39, the display 502 displays a panorama image and together therewith data of an average imaging time 381 and a processing time 391 measured by the CPU 122.

The CPU 122 calculates the average imaging time 381 as an average value of an imaging trigger interval time T counted 10 times (i.e., $\Sigma$T/10).

The imaging trigger interval time T can be calculated as T = {($\Delta$Tr $\times$ $\Delta$X) ^ 2 + ($\Delta$Tr $\times$ $\Delta$Y) ^ 2} ^ 0.5/v where $\Delta$Tr [count] represents an imaging trigger interval, ($\Delta$X, $\Delta$Y) [mm/count] represents an amount of movement for one pulse (or calibration data), and v [mm/sec] represents the conveyor's speed.

The CPU 122 measures a maximum processing time and an average processing time as the processing time 391. The maximum processing time indicates a maximum time taken for the measurement-processing done by the measurement processing unit 221, and the average processing time indicates an average time taken for the measurement-processing. It should be noted that the CPU 122 measures the processing time with an internal timer (not shown).

In the present embodiment, the measurement process should start and end within the imaging trigger interval time T, and the operator can compare the maximum processing time indicated by the processing time 391 with the average imaging time 381 and determine from the comparison result how much margin is available for the time taken to perform the measurement process. Then, with reference to the determined margin, a parameter value involved in the measurement process can be adjusted.

It should be noted that although a variety of types of functions described in the above-described embodiments can all be mounted in the captured image processing unit 120 and the operation display device 500, only a required type/types of function/functions may selectively be mounted.

[Fifth embodiment]

The support device 600 that is connected to the visual sensor 100 and the robot control device 200 through the network NW will be described below.

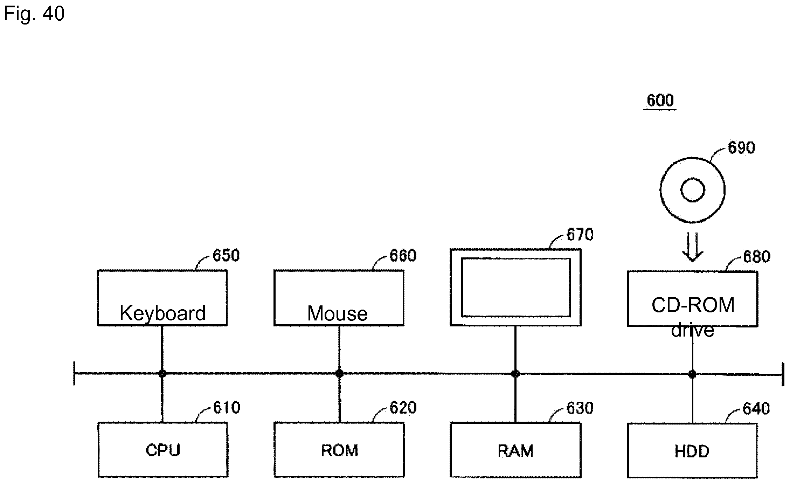

Fig. 40 is a schematic diagram illustrating a hardware configuration of a support device 600 according to a fourth embodiment of the present invention. Typically, the support device 600 is constructed by a general-purpose computer. Preferably the support device 600 is constructed by a notebook personal computer having excellent portability from the viewpoint of maintenance.

Referring to Fig. 40, the support device 600 includes a CPU 610 that executes various programs including the OS (Operating System), a ROM (Read Only Memory) 620 in which the BIOS and various pieces of data are stored, a memory RAM 630 that provides a working area in which the data necessary for the CPU 61 to execute the program is stored, and a hard disk drive (HDD) 640 in which the program and the like executed by the CPU 61 are stored in a nonvolatile manner.

The support device 600 also includes a keyboard 650 and a mouse 660, which receive the operation from the user, and a monitor 670 that presents the information to the user.

As described later, various programs executed by the support device 600 is distributed while stored in a CD-ROM 690. The program stored in the CD-ROM 690 is read by a CD-ROM (Compact Disk-Read Only Memory) drive 68, and stored in the hard disk drive (HDD) 640. Alternatively, the program may be downloaded from the upper-level host computer through the network.

As described above, because the support device 600 is constructed by the general-purpose computer, the detailed description is not repeated.

Because the support device 600 can conduct data communication with both the visual sensor 100 and the robot control device 200, the support device 600 can collect various pieces of data. The support device 600 may have the function related to the panoramic image display of the operation display device 500.

The table 331 in which the measurement result of each piece of image data 333 is stored can be used in order to analyze the action of the robot 300. That is, the robot action is recorded in the robot 300 while correlated with the counter value, which allows the robot action to be correlated with the measurement result 334 of the image corresponding to the robot action. Therefore, for example, in the case that the robot 300 fails in the holding action, the image of the workpiece that is of the holding target and the measurement result 334 can be reproduced on the support device 600 or the operation display device 500 in order to the pursue a cause of the failure. Therefore, the cause of the failure can easily be analyzed, or the information assisting the analysis can be presented.

It is to be noted that the disclosed embodiments are illustrative and not restricted. The scope of the present invention is defined by the claims.

DESCRIPTION OF SYMBOLS

| | |
|---|---|
| 10,20 | conveyer |
| 100 | visual sensor |
| 110 | imaging unit |
| 120 | captured image processing unit |
| 126 | image control unit |
| 132 | encoder counter |
| 200 | robot control device |
| 510 | computation processing unit |
| 221 | measurement processing unit |
| 222 | overlapping acquisition unit |
| 223 | image generation unit |
| 225 | ratio acquisition unit |
| 226 | parameter update unit |
| 227 | measurement parameter update unit |
| 228 | imaging parameter update unit |
| 229 | image division unit |

| 300 | robot |
|---|---|
| 500 | operation display device |
| 600 | support device |
| NW | network |
| S | calibration sheet |
| W | workpiece |
| 223A | panoramic image processing unit |
| 223C | rendering determination unit |
| 225A | display processing unit |
| 225B | missing image processing unit |
| 225C | encoder error processing unit |
| 225D | over/underflow processing unit |

**Claims**

1. An image processing device which is connected to an imaging unit (110),
the imaging unit (110):

   being configured to sequentially capture images of a plurality of workpieces conveyed on a conveying device (10), and
   having an imaging range such that the sequentially captured images overlap,

   the image processing device comprising:

   an interface (126) that receives image data (333) of the sequentially captured images obtained by the imaging unit (110);
   measurement unit (221) for acquiring a measurement result by performing measurement processing to a respective sequentially captured image, wherein measurement processing includes obtaining the position of each workpiece as measurement result;
   a panoramic image processing unit (223A) for performing processing related to generating and displaying a panoramic image, the panoramic image processing unit (223A) comprises
   an image generation unit (223B) for generating a panoramic image from the sequentially captured images such that the sequentially captured images overlap with one another within an overlapping range in an imaging order, wherein a variable N is used for counting the image data (333) relating to the sequentially captured images, and by superimposing the acquired measurement result; and
   an output unit (502) for outputting the panoramic image with the superimposed measurement result and information indicating the overlapping range correlated with the panoramic image with the superimposed measurement result represented by a geometric figure,
   wherein the image generation unit (223B) is configured to superimpose a measurement result (334N) of the Nth image data (333) as a measurement result of the (N + 1)th image data (333).

2. The image processing device according to claim 1, wherein the figure is one of a rectangle, an ellipse, or a circle having a line segment with a predetermined width,
   wherein the panoramic image processing unit (223A) comprises a rendering determination unit (223C) which is configured to determine whether to render a measurement result into an image or not depending on coordinates of the figure representing the measurement result,
   wherein if the rendering determination unit (223C) determines that the coordinates of the figure representing the measurement result of the Nth image deviate from the range of the (N + 1)th image, the image generation unit (223B) is configured to skip superimposing the measurement result (334N) of the Nth image data (333) as a measurement result of the (N + 1)th image data (333), and if the coordinates of the figure representing the measurement result (334N) for the Nth image are located within the range of the image data (333) of the (N + 1)th image, the image generation unit (223B) generates image data for the (N + 1)th image with the Nth image's measurement result (334N) superimposed thereon.

3. The image processing device according to claim 1, wherein the panoramic image processing unit (223A) further comprises a display processing unit (225A) for processing errors associated with generating or displaying the panoramic image.

4. The image processing device according to claim 3, wherein the display processing unit (225A) includes a missing image processing unit (225B), wherein, when at least one sequentially captured image is missing from the plurality of captured images, the missing image processing unit (225B) is configured to omit the image data (333) of the missing image or its measurement result from the panoramic image.

5. The image processing device according to claim 1, wherein the output unit (502) varies an output mode of each sequentially captured image in the panoramic image by varying a background color, so that the background color of the odd-numbered images differs from the background color of the even-numbered images.

6. The image processing device according to claim 1, further comprising an operation input unit that externally receives an operation, wherein the received operation selects one image from the sequentially captured images, wherein the output unit (502) outputs the sequentially captured image selected by the received operation in the panoramic image while enlarging the selected sequentially captured image.

7. The image processing device according to claim 6, wherein a measurement result that is designated by the operation received by the operation input unit is selected from the measurement results corresponding to the sequentially captured images, wherein the output unit (502) outputs the panoramic image, the panoramic image including the sequentially captured image corresponding to the selected measurement result and the sequentially captured images captured before and after the selected sequentially captured image.

8. The image processing device according to claim 1, wherein the output unit (502) varies the output modes of the measurement result corresponding to the sequentially captured image in which the imaging order is odd-numbered and the measurement result corresponding to the sequentially captured image in which the imaging order is even-numbered in the sequentially captured images in the panoramic image.

9. The image processing device according to claim 1, wherein information on a time necessary for the measurement processing performed by the measurement unit (221) is outputted.

10. A machine readable non transitory storage medium storing a image processing program that, when executed by a computer (120) connected to an imaging unit (110),
the imaging unit (110):

being configured to sequentially capture images of a plurality of workpieces conveyed on a conveying device (10), and
having an imaging range such that the sequentially captured images overlap,
the image processing program causes the computer to act as:

an interface (126) that receives image data (333) of the sequentially captured images obtained by the imaging unit (110);
measurement unit (221) for acquiring a measurement result by performing measurement processing to a respective sequentially captured image, wherein measurement processing includes obtaining the position of each workpiece as measurement result;
a panoramic image processing unit (223A) for performing processing related to generating and displaying a panoramic image, the panoramic image processing unit (223A) comprises
an image generation unit (223B) for generating a panoramic image from the sequentially captured images such that the sequentially captured images overlap with one another within an overlapping range in an imaging order, wherein a variable N is used for counting the image data (333) relating to the sequentially captured images, and by superimposing the acquired measurement result; and
an output unit (502) for outputting the panoramic image with the superimposed measurement result and information indicating the overlapping range correlated with the panoramic image with the superimposed measurement result represented by a geometric figure
wherein the image generation unit (223B) is configured to superimpose a measurement result (334N) of the Nth image data (333) as a measurement result of the (N + 1)th image data (333).

**EP 2 793 183 B1**

**Patentansprüche**

1. Bildverarbeitungsvorrichtung, die mit einer Abbildungseinheit (110) verbunden ist, wobei die Abbildungseinheit (110) geeignet ist, sequentiell Bilder einer Vielzahl von Werkstücken, die auf einer Fördervorrichtung (10) befördert werden, zu erfassen und einen solchen Abbildungsbereich hat, dass sich die nacheinander erfassten Bilder überlappen, wobei die Bildverarbeitungsvorrichtung umfasst:

   eine Schnittstelle (126), die Bilddaten (333) der von der Abbildungseinheit (110) erhaltenen sequentiell erfassten Bilder empfängt;
   eine Messeinheit (221) zum Erfassen eines Messergebnisses durch Ausführen einer Messverarbeitung an einem jeweiligen sequentiell erfassten Bild, wobei die Messverarbeitung das Erhalten der Position jedes Werkstücks als Messergebnis umfasst;
   eine Panoramabildverarbeitungseinheit (223A) zum Durchführen einer Verarbeitung, die sich auf das Erzeugen und Anzeigen eines Panoramabildes bezieht, wobei die Panoramabildverarbeitungseinheit (223A) umfasst:

   eine Bilderzeugungseinheit (223B) zum Erzeugen eines Panoramabildes aus den sequentiell erfassten Bildern, so dass die sequentiell erfassten Bilder einander innerhalb eines Überlappungsbereichs in einer Abbildungsreihenfolge überlappen, wobei eine Variable N zum Zählen der Bilddaten (333), die sich auf die sequentiell erfassten Bilder beziehen verwendet wird, und zum Überlagern des erfassten Messergebnisses; und
   eine Ausgabeeinheit (502) zur Ausgabe des Panoramabildes mit dem überlagerten Messergebnis und Information, die den mit dem Panoramabild korrelierten Überlappungsbereich mit dem durch eine geometrische Figur dargestellten überlagerten Messergebnis angibt,

   wobei die Bilderzeugungseinheit (223B) geeignet ist, ein Messergebnis (334N) der N-ten Bilddaten (333) als ein Messergebnis der (N + 1)-ten Bilddaten (333) zu überlagern.

2. Bildverarbeitungsvorrichtung nach Anspruch 1, wobei die Figur ein Rechteck, eine Ellipse oder ein Kreis mit einem Liniensegment mit einer vorbestimmten Breite ist,
   wobei die Panoramabildverarbeitungseinheit (223A) eine Wiedergabebestimmungseinheit (223C) umfasst, die geeignet ist, abhängig von den Koordinaten der das Messergebnis darstellenden Figur, zu bestimmen, ob ein Messergebnis in einem Bild wiedergeben werden soll oder nicht,
   wobei, falls die Wiedergabebestimmungseinheit (223C) bestimmt, dass die Koordinaten der das Messergebnis des N-ten Bildes darstellenden Figur von dem Bereich des (N + 1)-ten Bildes abweichen, die Bilderzeugungseinheit (223B) geeignet ist, die Überlagerung des Messergebnisses (334N) der N-ten Bilddaten (333) als Messergebnis der (N + 1)-ten Bilddaten (333) zu überspringen, und falls die Koordinaten der das Messergebnis (334N) für das N-te Bild darstellenden Figur innerhalb des Bereichs der Bilddaten (333) des (N + 1)-ten Bildes hegen, die Bilderzeugungseinheit (223B) Bilddaten für das (N + 1)-te Bild mit dem darauf überlagerten Messergebnis (334N) des N-ten Bildes erzeugt.

3. Bildverarbeitungsvorrichtung nach Anspruch 1, wobei die Panoramabildverarbeitungseinheit (223A) ferner eine Anzeigeverarbeitungseinheit (225A) zur Verarbeitung von Fehlern, die mit der Erzeugung oder Anzeige des Panoramabildes verbunden sind, umfasst.

4. Bildverarbeitungsvorrichtung nach Anspruch 3, wobei die Anzeigeverarbeitungseinheit (225A) eine Verarbeitungseinheit für fehlende Bilder (225B) enthält, wobei, falls mindestens ein sequentiell erfasstes Bild aus der Vielzahl der erfassten Bilder fehlt, die Verarbeitungseinheit für fehlende Bilder (225B) geeignet ist, die Bilddaten (333) des fehlenden Bildes oder dessen Messergebnis aus dem Panoramabild auszulassen.

5. Bildverarbeitungsvorrichtung nach Anspruch 1, wobei die Ausgabeeinheit (502) einen Ausgabemodus jedes sequentiell erfassten Bildes im Panoramabild durch Variieren einer Hintergrundfarbe variiert, so dass sich die Hintergrundfarbe der ungeradzahligen Bilder von der Hintergrundfarbe der geradzahligen Bilder unterscheidet.

6. Bildverarbeitungsvorrichtung nach Anspruch 1, ferner umfassend eine Funktionseingabeeinheit, die extern eine Funktion empfängt, wobei die empfangene Funktion ein Bild aus den sequentiell aufgenommenen Bildern auswählt, wobei die Ausgabeeinheit (502) das durch die empfangene Funktion ausgewählte sequentiell erfasste Bild im Panoramabild ausgibt, wobei das ausgewählte sequentiell erfasste Bild vergrößert wird.

**7.** Bildverarbeitungsvorrichtung nach Anspruch 6, wobei ein Messergebnis, das durch die von der Funktionseingabeeinheit empfangenen Funktion bestimmt wird, aus den Messergebnissen ausgewählt wird, die den sequentiell erfassten Bildern entsprechen,

wobei die Ausgabeeinheit (502) das Panoramabild ausgibt, wobei das Panoramabild das sequentiell aufgenommene Bild, das dem ausgewählten Messergebnis entspricht, und die vor und nach dem ausgewählten sequentiell aufgenommenen Bild sequentiell aufgenommenen Bilder, enthält.

**8.** Bildverarbeitungsvorrichtung nach Anspruch 1, wobei die Ausgabeeinheit (502) die Ausgabemodi des Messergebnisses entsprechend dem sequentiell erfassten Bild, bei dem die Abbildungsreihenfolge ungeradzahlig ist, und des Messergebnisses entsprechend dem sequentiell erfassten Bild, bei dem die Abbildungsreihenfolge in den sequentiell erfassten Bildern im Panoramabild geradzahlig ist, variiert.

**9.** Bildverarbeitungsvorrichtung nach Anspruch 1, wobei Informationen über eine Zeit, die für die von der Messeinheit (221) durchgeführte Messverarbeitung erforderlich ist, ausgegeben werden.

**10.** Maschinenlesbares, nicht vorübergehendes Speichermedium, das ein Bildverarbeitungsprogramm speichert, das, wenn es von einem mit einer Abbildungseinheit (110) verbundenen Computer (120) ausgeführt wird, wobei die Abbildungseinheit (110) geeignet ist:

sequentiell Bilder einer Vielzahl von Werkstücken zu erfassen, die auf einer Fördervorrichtung (10) befördert werden, und
einen solchen Abbildungsbereich zu haben, dass sich die nacheinander aufgenommenen Bilder überlappen,

das Bildverarbeitungsprogramm den Computer veranlasst, tätig zu werden als:

eine Schnittstelle (126), die Bilddaten (333) der von der Abbildungseinheit (110) erhaltenen sequentiell erfassten Bilder empfängt;
eine Messeinheit (221) zum Erfassen eines Messergebnisses durch Ausführen einer Messverarbeitung an einem jeweiligen sequentiell erfassten Bild, wobei die Messverarbeitung das Erhalten der Position jedes Werkstücks als Messergebnis umfasst;
eine Panoramabildverarbeitungseinheit (223A) zum Durchführen einer Verarbeitung, die sich auf das Erzeugen und Anzeigen eines Panoramabildes bezieht, wobei die Panoramabildverarbeitungseinheit (223A) umfasst:

eine Bilderzeugungseinheit (223B) zum Erzeugen eines Panoramabildes aus den sequentiell erfassten Bildern, so dass die sequentiell erfassten Bilder einander innerhalb eines Überlappungsbereichs in einer Abbildungsreihenfolge überlappen, wobei eine Variable N zum Zählen der Bilddaten (333), die sich auf die sequentiell erfassten Bilder beziehen verwendet wird, und zum Überlagern des erfassten Messergebnisses; und
eine Ausgabeeinheit (502) zur Ausgabe des Panoramabildes mit dem überlagerten Messergebnis und Information, die den mit dem Panoramabild korrelierten Überlappungsbereich mit dem durch eine geometrische Figur dargestellten überlagerten Messergebnis angibt,

wobei die Bilderzeugungseinheit (223B) geeignet ist, ein Messergebnis (334N) der N-ten Bilddaten (333) als ein Messergebnis der (N + 1)-ten Bilddaten (333) zu überlagern.

### Revendications

**1.** Dispositif de traitement d'image qui est connecté à une unité d'imagerie (110), l'unité d'imagerie (110) :

étant configurée pour capturer séquentiellement des images d'une pluralité de pièces ouvrées transportées sur un dispositif de transport (10), et
ayant une portée d'imagerie telle que les images capturées de manière séquentielle se chevauchent,

le dispositif de traitement d'image comprenant :

une interface (126) qui reçoit les données d'image (333) des images capturées séquentiellement obtenues par l'unité d'imagerie (110) ;

**EP 2 793 183 B1**

une unité de mesure (221) pour acquérir un résultat de mesure en effectuant un traitement de mesure sur une image respective capturée séquentiellement, dans laquelle le traitement de mesure comprend l'obtention de la position de chaque pièce comme résultat de mesure ;

une unité de traitement d'image panoramique (223A) pour effectuer un traitement lié à la génération et à l'affichage d'une image panoramique, l'unité de traitement d'image panoramique (223A) comprenant:

une unité de génération d'image (223B) pour générer une image panoramique à partir des images capturées séquentiellement de telle sorte que les images capturées séquentiellement se chevauchent les unes les autres dans une plage de chevauchement dans un ordre d'imagerie, dans laquelle une variable N est utilisée pour compter les données d'image (333) relatives aux images capturées séquentiellement, et pour superposer le résultat de mesure acquis ; et

une unité de sortie (502) pour la sortie de l'image panoramique avec le résultat de mesure superposé et une information indiquant la plage de chevauchement corrélée avec l'image panoramique avec le résultat de mesure superposé représenté par une figure géométrique,

dans lequel l'unité de génération d'images (223B) est configurée pour superposer un résultat de mesure (334N) de la N-ième donnée d'image (333) comme résultat de mesure de la (N + I)-ième donnée d'image (333).

2. Dispositif de traitement d'image selon la revendication 1, dans lequel la figure est l'une des figures suivantes : un rectangle, une ellipse ou un cercle ayant un segment de ligne d'une largeur prédéterminée,

dans lequel l'unité de traitement d'image panoramique (223A) comprend une unité de détermination de la reproduction (223C) qui est configurée pour déterminer s'il faut ou non reproduire un résultat de mesure dans une image en fonction des coordonnées de la figure représentant le résultat de mesure,

dans lequel si l'unité de détermination de la reproduction (223C) détermine que les coordonnées de la figure représentant le résultat de la mesure de la N-ième image dévient de la plage de la (N + I)-ième image, l'unité de génération d'image (223B) est configurée pour sauter la superposition du résultat de la mesure (334N) de la N-ième donnée d'image (333) comme résultat de la mesure de la (N + I)-ième donnée d'image (333), et si les coordonnées de la figure représentant le résultat de la mesure (334N) pour la N-ième image sont situées dans la plage des données (333) de la (N + I)-ième image, l'unité de génération d'images (223B) génère des données pour la (N + I)-ième image avec le résultat de la mesure (334N) de la N-ième image superposé à celle-ci.

3. Dispositif de traitement d'image selon la revendication 1, dans lequel l'unité de traitement d'image panoramique (223A) comprend en outre une unité de traitement d'affichage (225A) pour traiter des erreurs associées à la génération ou à l'affichage de l'image panoramique.

4. Dispositif de traitement d'image selon la revendication 3, dans lequel l'unité de traitement d'affichage (225A) comprend une unité de traitement d'image manquante (225B), dans lequel, lorsqu'au moins une image capturée séquentiellement est manquante de la pluralité d'images capturées, l'unité de traitement d'image manquante (225B) est configurée pour omettre les données d'image (333) de l'image manquante ou son résultat de mesure de l'image panoramique.

5. Dispositif de traitement d'image selon la revendication 1, dans lequel l'unité de sortie (502) fait varier un mode de sortie de chaque image capturée séquentiellement dans l'image panoramique en faisant varier une couleur de fond, de sorte que la couleur de fond des images impaires diffère de la couleur de fond des images paires.

6. Dispositif de traitement d'image selon la revendication 1, comprenant en outre une unité d'entrée d'opération qui reçoit de l'extérieur une opération, dans lequel l'opération reçue sélectionne une image parmi les images capturées séquentiellement,

dans lequel l'unité de sortie (502) sort l'image séquentielle sélectionnée par l'opération reçue dans l'image panoramique tout en agrandissant l'image séquentielle sélectionnée.

7. Dispositif de traitement d'image selon la revendication 6, dans lequel un résultat de mesure qui est désigné par l'opération reçue par l'unité d'entrée d'opération est sélectionné parmi les résultats de mesure correspondant aux images capturées séquentiellement,

dans lequel l'unité de sortie (502) produit l'image panoramique, l'image panoramique comprenant l'image capturée séquentiellement correspondant au résultat de mesure sélectionné et les images capturées séquentiellement avant et après l'image capturée séquentiellement sélectionnée.

**8.** Dispositif de traitement d'image selon la revendication 1, dans lequel l'unité de sortie (502) fait varier les modes de sortie du résultat de mesure correspondant à l'image capturée séquentiellement dans laquelle l'ordre d'imagerie est impair et le résultat de mesure correspondant à l'image capturée séquentiellement dans laquelle l'ordre d'imagerie est pair dans les images capturées séquentiellement dans l'image panoramique.

**9.** Dispositif de traitement d'image selon la revendication 1, dans lequel des informations sur le temps nécessaire au traitement de mesure effectué par l'unité de mesure (221) sont émises.

**10.** Support d'enregistrement non temporaire lisible par machine enregistrant un programme de traitement d'image qui, lorsqu'il est exécuté par un ordinateur (120) connecté à une unité d'imagerie (110), l'unité d'imagerie (110) étant configurée pour:

capturer séquentiellement des images d'une pluralité de pièces ouvrées transportées sur un dispositif de transport (10), et
avoir une portée d'imagerie telle que les images capturées de manière séquentielle se chevauchent, le programme de traitement d'image fait agir l'ordinateur comme :

une interface (126) qui reçoit les données d'image (333) des images capturées séquentiellement obtenues par l'unité d'imagerie (110) ;
une unité de mesure (221) pour acquérir un résultat de mesure en effectuant un traitement de mesure sur une image respective capturée séquentiellement, dans laquelle le traitement de mesure comprend l'obtention de la position de chaque pièce comme résultat de mesure ;
une unité de traitement d'image panoramique (223A) pour effectuer un traitement lié à la génération et à l'affichage d'une image panoramique, l'unité de traitement d'image panoramique (223A) comprenant:

une unité de génération d'image (223B) pour générer une image panoramique à partir des images capturées séquentiellement de telle sorte que les images capturées séquentiellement se chevauchent les unes les autres dans une plage de chevauchement dans un ordre d'imagerie, dans laquelle une variable N est utilisée pour compter les données d'image (333) relatives aux images capturées séquentiellement, et pour superposer le résultat de mesure acquis ; et
une unité de sortie (502) pour la sortie de l'image panoramique avec le résultat de mesure superposé et une information indiquant la plage de chevauchement corrélée avec l'image panoramique avec le résultat de mesure superposé représenté par une figure géométrique,

dans lequel l'unité de génération d'images (223B) est configurée pour superposer un résultat de mesure (334N) de la N-ième donnée d'image (333) comme résultat de mesure de la (N + I)-ième donnée d'image (333).

Fig. 1

Robot control device 200

NW

100

500

600

300

Pulse signal

Conveying direction

Conveying direction

Imaging visual field

Line 2 20

22

Line 1 10

14

12

30

W

Fig. 2

Fig. 3

122

221
Measurement processing unit

222
Overlapping acquisition unit

223
Image generation unit

225
Ratio acquisition unit

226
Parameter update unit

227
Measurement parameter update unit

228
Imaging parameter update unit

229
Image segmentation unit

Fig. 4

| Image data | Measurement result | Deviation amount | Counter value | Parameter | Interval |
|---|---|---|---|---|---|
| D(1) | M(1) | M(1) | C(1) | P(1) | It(1) |
| D(2) | M(2) | M(2) | C(2) | P(2) | It(2) |
| D(3) | M(3) | M(3) | C(3) | P(3) | It(3) |
| ⋮ | ⋮ | ⋮ | ⋮ | ⋮ | ⋮ |
| D(i) | M(i) | M(i) | C(i) | P(i) | It(i) |
| ⋮ | ⋮ | ⋮ | ⋮ | ⋮ | ⋮ |
| D(n) | M(n) | M(n) | C(n) | P(n) | It(n) |

| Image data | Measurement result | Deviation amount | Position | Ratio |
|---|---|---|---|---|

350: imaging parameter

EP 2 793 183 B1

Fig. 5

T(n)          T(n+1)                                    Time

Fig. 6

Fig. 7

Fig. 8

(A)

(B)

(C)

62

61
60

63
61
60

64
61
60

EP 2 793 183 B1

38

Fig. 9

72
70
71
73

| | | |
| IIIII | XXXXX XX | Trend | Histogram | | Measurement | NG |

OK 32ms 📷 Working 🔍🔍□

**Measurement data**

Measurement times: 200
NG times: 4
NG rate (%): 2

Statistical data clear

**Inspection flow**

| No. | Separation unit |
|-----|-----------------|
| 1 | ECV search marker |
| 2 | Search |
| 3 | |
| 4 | |

**X X X X**

Determination: OK
Correlation value: 78
Measurement coordinate X: 254
Measurement coordinate Y: 123

**X X X X**

X X X X X X

End

Fig. 10

```
                    ╭─────────╮
                    │  Start  │
                    ╰────┬────╯
                         │ ◄──────────────────────┐
                         ▼                         │
          ┌─────────────────────────────┐         │
 S1a ─────┤   Receive panoramic         │         │
          │   image data                │         │
          └──────────────┬──────────────┘         │
                         ▼                         │
          ┌─────────────────────────────┐         │
  S2 ─────┤   Display panoramic         │         │
          │   image                     │         │
          └──────────────┬──────────────┘         │
                         ▼                         │
          ┌─────────────────────────────┐         │
          │   Display measurement       │         │
  S3 ─────┤   result and overlapping    │         │
          │   region in panoramic image │         │
          └──────────────┬──────────────┘         │
                         ▼                         │
          ┌─────────────────────────────┐         │
 S4a ─────┤   Input information         │         │
          └──────────────┬──────────────┘         │
                         ▼                         │
          ┌─────────────────────────────┐         │
  S5 ─────┤   Edit measurement          │         │
          │   processing parameter      │         │
          └──────────────┬──────────────┘         │
                         ▼                         │
          S6 ╮         ╱     ╲         NO          │
           ╲  ╱  End?   ╲ ──────────────────────────┘
             ╲         ╱
               ╲     ╱
                │ YES
                ▼
          ╭─────────╮
          │   End   │
          ╰─────────╯
```

Fig. 11

EP 2 793 183 B1

**Inspection flow**

| No. | Separation unit |
|---|---|
| 1 | ECV search marker |
| 2 | Search |
| 3 | |
| 4 | |
| 5 | |

X X X X

α search ▼ | X-coordinate ▼

X X X X

Determination: OK
Correlation value: 78
Measurement coordinate X: 254
Measurement coordinate Y: 123

X X X X

X X X X X X

OK  32ms  Through

X X X X X  X X  Trend  Histogram

91

End

Fig. 12

Fig. 13

Fig. 14

Fig. 15

Fig. 16

Fig. 17

Fig. 18

EP 2 793 183 B1

Fig. 19

Fig. 20

## Fig. 21

EP 2 793 183 B1

## Fig. 22

**Inspection flow**

| No. | Separation unit |
|---|---|
| 1 | ECV search marker |
| 2 | Search |
| 3 | |
| 4 | |
| 5 | |

XXXX

☐ α search ▼  X-coordinate ▼

XXXX

Determination: OK
Correlation value: 78
Measurement coordinate X: 254
Measurement coordinate Y: 123

XXXX

Adjustment — 171

End

61 60 62

OK 32ms  ☐Through

95
94
97
91
97

OK 32ms  Through

XXXX XXXX

Fig. 23

```
                    ┌─────────────┐
                    │    Start    │
                    └──────┬──────┘
                           │
                           ▼
              ┌─────────────────────────┐
    S1a       │   Receive panoramic     │
              │      image data         │
              └───────────┬─────────────┘
                          │
                          ▼  ◄─────────────────────────┐
              ┌─────────────────────────┐              │
    S2        │   Display panoramic     │              │
              │        image            │              │
              └───────────┬─────────────┘              │
                          │                            │
                          ▼                            │
              ┌─────────────────────────┐              │
    S3        │  Display measurement    │              │
              │  result and overlapping │              │
              │ region in panoramic image│             │
              └───────────┬─────────────┘              │
                          │                            │
                          ▼                            │
              ┌─────────────────────────┐              │
    S4b       │    Input information     │             │
              └───────────┬─────────────┘              │
                          │                            │
                          ▼                            │
              ┌─────────────────────────┐              │
    S5        │     Edit imaging         │             │
              │      parameter           │             │
              └───────────┬─────────────┘              │
                          │                         S7 │
                          ▼                            │
        S6          ╱─────────────╲    NO   ┌──────────────────────┐
                   ╱     End?       ╲──────►│ Divide panoramic image to│
                   ╲               ╱        │  perform measurement   │
                    ╲─────────────╱         │ processing to each image│
                          │                 └──────────────────────┘
                          │ YES
                          ▼
                    ┌─────────────┐
                    │     End     │
                    └─────────────┘
```

Fig. 24

Image coordinate system

x [pix]

y [pix]

Image

Robot coordinate value

NW

Overlapping elimination

100

200

Robot control device

Robot coordinate value

Conveyer position

300

400

X[mm]

Robot coordinate system

Y[mm]

W

x

y

12

Imaging range

14

Tracking range (operating range)

10

EP 2 793 183 B1

Fig. 25

124c

| Parameter | Format | Meaning |
|---|---|---|
| xi1, yi1<br>xi2, yi2<br>xi3, yi3<br>xi4, yi4 | Real number [pixel] | Image coordinates at four points of target pattern |
| E1<br>E2<br>E3 | Integral number [pulses] | Encoder count value<br>E1: at beginning of calibration<br>E2: when conveyer is moved to robot operating range (upstream side)<br>E3: when conveyer is moved to robot operating range (downstream side) |
| X1, Y1<br>X2, Y2<br>X3, Y3<br>X4, Y4 | Real number [mm] | Robot coordinates at four points of target pattern when conveyer is moved to robot operating range (upstream side) |
| X5, Y5 | Real number [mm] | Robot coordinate of mark 1 of target pattern when conveyer is moved to robot operating range (downstream side) |
| dX<br>dY | Real number [mm/ pulse] | Distance in which conveyer moves in X-direction and Y-direction every pulse of encoder<br>dX = (X5 - X1)/(E3 - E2)<br>dY = (Y5 - Y1)/(E3 - E2) |
| A, B, C,<br>D, E, F | Real number | Parameter used to convert mage coordinate system into robot coordinate system<br>X = A·xi + B·yi + C<br>Y = D·xi + E·yi + F |

Fig. 26

NW

Image coordinate
value acquisition

Mark
designation

200

Robot
control
device

100

S

x

y

300

400

X

Y

Imaging range

12

14

Tracking range
(operating range)

10

EP 2 793 183 B1

Fig. 27

Robot coordinate value    NW

200

100

Robot control device

Robot coordinate value

Conveyer position

Imaging range

x
y

12

300

400

X
Y

14

Tracking range
S (operating range)

10

EP 2 793 183 B1

Fig. 28

Robot coordinate value    NW

Robot coordinate value

100

Robot
control
device

200

Conveyer
position

400

300

X

Y

x

y

Imaging range

12

14

Tracking range
(operating range)    S

10

EP 2 793 183 B1

Fig.29

```
                        ┌──────────┐
                        │  Start   │
                        └──────────┘
                             │
T1 ─── ┌─────────────────────────────────────┐
       │                N=0                   │
       └─────────────────────────────────────┘
                             │
T3 ─── ┌─────────────────────────────────────┐
       │               N=N+1                  │
       └─────────────────────────────────────┘
                             │
T5 ─── ┌─────────────────────────────────────┐
       │            Read Nth image            │
       └─────────────────────────────────────┘
                             │
T7 ─── ┌─────────────────────────────────────┐
       │      Superimpose measurement         │
       │               result                 │
       └─────────────────────────────────────┘
                             │
T9 ─── ┌─────────────────────────────────────┐
       │           Read N+1th image           │
       └─────────────────────────────────────┘
                             │
T11 ── ┌─────────────────────────────────────┐
       │      Superimpose measurement         │
       │               result                 │
       └─────────────────────────────────────┘
                             │
T13 ── ┌─────────────────────────────────────┐
       │           Overlap images             │
       └─────────────────────────────────────┘
                             │
T15 ──      ◇ Finish ? ◇  ── NO
                │
              YES
                │
          ┌──────────┐
          │   End    │
          └──────────┘
```

Fig. 30

122

221

Measurement processing unit

222

Overlapping acquisition unit

223A

Panoramic image processing unit

223B

Image generation unit

223C

Drawing determination unit

225A

Display processing unit

225B

Missing image processing unit

225C

Encoder error processing unit

225D

Over / underflow processing unit

124

Table — 331

Panoramic image — 332A

Display image — 332B

Fig.31

Fig.32

N

334N

334N

N+1

$\Delta \mathrm{Tr}(\Delta \mathrm{X}, \Delta \mathrm{Y})[\mathrm{mm}]$

Fig.33

$\Delta Tr(\Delta X, \Delta Y)[mm]$

Fig.34

$|\Delta x| \geqq |\Delta y|$ AND $\Delta x \geqq 0$

④        ③        ②        ①

62    62    62

AR

N+3        N+2        N+1        N

Fig.35

$|\Delta x| \geqq |\Delta y|$ AND $\Delta x < 0$

①        ②        ③        ④

62    62    62

AR

Fig.36

$$|\Delta x| < |\Delta y| \quad \text{AND} \quad y \geqq 0$$

Fig.37

$$|\Delta x| < |\Delta y| \quad \text{AND} \quad \Delta y < 0$$

Fig.38

502

Image capture

Conveyer Speed | 500.0000 | [mm/sec]
Average capture time | 812.8449 | [ms] — 381
Max processing time | 21 | [ms] — 391
Average processing time | 18 | [ms]

Setting panoramic image

Encoder condition | Down count ▽
☑ Display Image Border

OK 20ms

62

62

Fig.39

502

Image capture

OK 20ms

Conveyer Speed          500.0000    [mm/sec]
Average capture time    812.8449    [ms] ——381
Max processing time     21          [ms] ——391
Average processing time 18          [ms]

Setting panoramic image

Encoder condition        Up count    ▽
☑ Display Image Border

62

62

Fig. 40

600

690

650 Keyboard

660 Mouse

670

680 CD-ROM drive

610 CPU

620 ROM

630 RAM

640 HDD

EP 2 793 183 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002113679 A
- JP 5260264 A
- EP 2667145 A1
- US 2010309308 A1, Saphier Ofer
- US 2008036873 A1, SILVER WILLIAM M